(19) Europäisches Patentamt
European Patent Office
Office européen des brevets

(11) EP 1 583 801 B1

(12) **EUROPÄISCHE PATENTSCHRIFT**

(45) Veröffentlichungstag und Bekanntmachung des Hinweises auf die Patenterteilung:
**13.06.2012 Patentblatt 2012/24**

(21) Anmeldenummer: **03795857.6**

(22) Anmeldetag: **29.11.2003**

(51) Int Cl.:
***C08L 83/04*** *(2006.01)*

(86) Internationale Anmeldenummer:
**PCT/EP2003/013474**

(87) Internationale Veröffentlichungsnummer:
**WO 2004/052994 (24.06.2004 Gazette 2004/26)**

# (54) ADDITIONSVERNETZENDE ZWEIKOMPONENTEN-SILICONMATERIALIEN MIT HOHER SHORE D-HÄRTE

ADDITION CROSS-LINKING TWO-COMPONENT SILICON MATERIALS WITH A HIGH SHORE D HARDNESS

MATERIAUX DE TYPE SILICONE A DEUX COMPOSANTS, A RETICULATION PAR ADDITION, PRESENTANT UNE DURETE SHORE D

(84) Benannte Vertragsstaaten:
**AT BE BG CH CY CZ DE DK EE ES FI FR GB GR HU IE IT LI LU MC NL PT RO SE SI SK TR**

(30) Priorität: **12.12.2002 DE 10257935**
**23.12.2002 DE 10261917**

(43) Veröffentlichungstag der Anmeldung:
**12.10.2005 Patentblatt 2005/41**

(73) Patentinhaber: **Kettenbach GmbH & CO. KG**
**35713 Eschenburg (DE)**

(72) Erfinder:
- **BUBLEWITZ, Alexander**
  **35745 Herborn (DE)**
- **REBER, Jens-Peter**
  **58540 Meinerzhagen (DE)**
- **NAGEL, Ulrich**
  **72076 Tübingen (DE)**

(74) Vertreter: **KEIL & SCHAAFHAUSEN**
**Patentanwälte**
**Cronstettenstraße 66**
**60322 Frankfurt am Main (DE)**

(56) Entgegenhaltungen:
**EP-A- 0 894 117 DE-A- 2 646 726**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 583 801 B1

## Beschreibung

Die vorliegende Erfindung betrifft ein additionsvernetzendes Zweikomponenten-Siliconmaterial enthaltend wenigstens ein Organopolysiloxan mit wenigstens zwei Vinylgruppen im Molekül oder eine Mischung aus zwei oder mehreren Organopolysiloxanen jeweils unterschiedlicher Kettenlänge und jeweils mit mindestens zwei Vinylgruppen im Molekül, sowie wenigstens ein Organohydrogenpolysiloxan mit zwei oder mehr SiH-Gruppen im Molekül und wenigstens einen Katalysator. Außerdem betrifft die vorliegende Erfindung die Verwendung dieser additionsvernetzendes Zweikomponenten-Siliconmaterialien.

Aufgrund ihrer anwendungstechnischen Eigenschaften, sowohl eine hohe Endhärte als auch eine geringe elastische Verformbarkeit aufzuweisen, werden derartige Zweikomponenten-Siliconmaterialien bei verschiedenen Anwendungen eingesetzt, beispielsweise in der Dentalmedizin und Dentaltechnik zur Verschlüsselung, Fixierung, Positionierung, Wiederherstellung, Übertragung, Remontage und Bissregistrierung. Insbesondere bei der Bissregistrierung, bei der die Lagebeziehung beider Kiefer zueinander in dem Bissregistriermaterial genau fixiert werden soll, ist eine hohe Endhärte des Materials für eine gute Bearbeitbarkeit des Materials mit einer Fräse oder einem Skalpell und eine niedrige Elastizität, um überschüssiges Material gezielt abbrechen zu können, entscheidend. Abgesehen davon, müssen die Materialien einen möglichst geringen Schrumpfungsgrad während der Aushärtung aufweisen, um eine genaue Wiedergabe der Kieferrelationen zu gewährleisten. Daneben sollen die Materialien zwecks Vermeidung von Abweichungen durch Relativbewegungen des Kiefers im Patientenmund eine möglichst kurze Abbindezeit aufweisen. Andererseits muss die Verarbeitungszeit wenigstens 15 bis 30 Sekunden betragen, um dem Zahnarzt das Aufbringen des Materials auf die Occlusionsfläche des Unterkiefers zu erlauben.

Bekannte additionsvernetzende Zweikomponenten-Siliconmaterialien enthalten wenigstens ein vergleichsweise langkettiges Organopolysiloxan, ein Organohydrogenpolysiloxan als Vernetzer und einen Katalysator. Zur Einstellung der gewünschten Abbindezeit werden diesen üblicherweise zusätzlich kurzkettige Organopolysiloxane zugesetzt, die als Inhibitoren der Hydrosilylierungsreaktion wirken und somit eine zu schnelle Aushärtung des Materials verhindern. Daneben enthalten diese Materialien herkömmlicherweise Füllstoffe, um die Endhärte der ausgehärteten Massen zu erhöhen.

Aus der DE 26 46 726 A1 ist ein Verfahren zum Regeln der Vernetzungsgeschwindigkeit von additionsvernetzenden Siliconmaterialien bekannt, bei welchem dem Zweikomponentenmaterial enthaltend ein langkettiges Organopolysiloxan mit aliphatischen Mehrfachbindungen im Molekül, Füllstoffe, Vernetzer und Katalysator vor dem Vermischen der Komponenten mindestens ein kurzkettiges Organopolysiloxan der allgemeinen Formel

$$CH_2{=}CH\text{-}R_2SiO\text{-}(SiR_2O)_n\text{-}SiR_2\text{-}CH{=}CH_2,$$

worin R gleiche oder verschiedene, von aliphatischen Mehrfachbindungen freie, einwertige, gegebenenfalls substituierte Kohlenwasserstoffe und n gleich 0 oder eine ganze Zahl zwischen 1 und 6 bedeutet,

zugesetzt wird.

Dabei wirken die kurzkettigen Organopolysiloxane als Inhibitoren der Hydrosilylierungsreaktion und verlangsamen demgemäß die Vernetzung zwischen dem langkettigen Organopolysiloxan mit aliphatischen Mehrfachbihdungen und dem Organohydrogenpolysiloxan. Um eine zu starke Inhibierung der Hydrosilylierungsreaktion zu vermeiden, darf der Gehalt an Inhibitor 5.000 Gewichts-ppm, entsprechend 0,5 Gew.-%, bezogen auf das Gesamtgewicht aller eingesetzten Organosiliciumverbindungen, nicht übersteigen.

In der EP 0 522 341 A1 werden additionsvernetzende Massen auf Polysiloxanbasis offenbart, welche neben Organopolysiloxanen mit zwei oder mehreren Vinylgruppen im Molekül und einer Viskosität zwischen 100 und 200.000 mPa·s, neben Organohydrogenpolysiloxanen, neben Katalysatoren und Farbstoffen Compounds von hochdispersen aktiven Füllstoffen in Silikonöl und kurzkettige Organopolysiloxane mit zwei oder mehreren Vinylgruppen im Molekül enthalten. Die kurzkettigen Organopolysiloxane entsprechen der allgemeinen Formel

$$CH_2{=}CH\text{-}R_2SiO\text{-}(SiR_2O)_nSiR_2\text{-}CH{=}CH_2,$$

worin R gleiche oder verschiedene, von aliphatischen Mehrfachbindungen freie, einwertige, gegebenenfalls substituierte Kohlenwasserstoffe und n eine ganze Zahl zwischen 10 und 20 bedeutet.

Im Gegensatz zu den in der DE-OS 26 46 726 beschriebenen Inhibitoren mit einer Kettenlänge n zwischen 0 und 6, sollen die o.g. Organopolysiloxane mit n zwischen 10 und 20 bis zu einer Menge von maximal 8 Gew.-%, bezogen auf das Gesamtgewicht der Masse, nicht inhibierend wirkend. Allerdings weisen die in der EP 0 522 341 A1 offenbarten Siliconmaterialien lediglich eine Shore A-Härte von maximal 78, entsprechend einer Shore D-Härte von maximal 19, und ein Elastizitätsmodul von maximal 9 MPa auf. Diese mechanischen Eigenschaften sind jedoch für die meisten

dentalmedizinischen und dentaltechnischen Anwendungen, insbesondere für die Bissregistrierung, unzureichend.

In der EP 0 894 117 B1 werden additionsvernetzende Zweikomponenten-Siliconmaterialien beschrieben, welche Organopolysiloxane mit zwei Vinylgruppen im Molekül, Organohydrogenpolysiloxane mit zwei oder mehr SiH-Gruppen und einem SiH-Gehalt von 1 bis 15 mmol/g als Vernetzer, einen Katalysator, verstärkende Füllstoffe sowie nichtverstärkende Füllstoffe enthalten, wobei das Organopolysiloxan mit zwei Vinylgruppen im Molekül eine Viskosität zwischen 21 und 99 mPa·s, entsprechend einer Kettenlänge von etwa 21 bis 69, aufweist. Zur Regelung der Vernetzungsgeschwindigkeit können diesen Materialien die in der DE 26 46 726 A1 offenbarten Inhibitoren bis zu 1 Gew.-%, bezogen auf das Gesamtgewicht des Siliconmaterials, zugesetzt sein. Diese ausgehärteten Massen weisen eine Shore D-Härte von wenigstens 35 und ein Elastizitätsmodul von größer 20 MPa (gemessen nach DIN 53457 oder 53455) auf, was für die meisten dentalmedizinischen und dentaltechnischen Anwendungen schon ganz gut ist. Dennoch sind für diese Indikationen Materialien mit noch höherer mechanischer Festigkeit und geringerer Elastizität wünschenswert.

Aufgabe der vorliegenden Erfindung ist es, ein additionsvernetzendes Zweikomponenten-Siliconmaterial zur Verfügung zu stellen, welche sich im Vergleich zu den bekannten Massen durch eine höhere Shore D-Härte und/oder ein höheres Elastizitätsmodul auszeichnet und bezüglich der weiteren anwendungstechnischen Eigenschaften, insbesondere Schrumpfungsgrad sowie Abbindezeit, diesen zumindest vergleichbar ist.

Diese Aufgabe wird erfindungsgemäß durch ein additionsvernetzendes Zweikomponenten-Siliconmaterial der Zusammensetzung gemäß Patentanspruch 1 gelöst.

Als ein Organopolysiloxan im Sinne der vorliegenden Erfindung wird sowohl eine Vielzahl an molekulareinheitlichen Polymermolekülen, also eine Substanz, welche ausschließlich Organopolysiloxanmoleküle mit derselben Kettenlänge aufweist, als auch eine Mischung aus Polymerhomologen verschiedenen Polymerisationsgrades verstanden. Im letzteren Fall entspricht die angegebene Kettenlänge derjenigen des mengenmäßigen Hauptbestandteils. Ein Organopolysiloxan der allgemeinen Formel I mit einer Kettenlänge n=3 im Sinne der vorliegenden Erfindung enthält somit entweder ausschließlich Moleküle mit dieser Kettenlänge oder besteht aus einer Mischung aus Molekülen mit jeweils gleichen Resten, aber verschiedenen Kettenlängen, wobei der Anteil an Molekülen mit einer Kettenlänge n=3, bezogen auf die Gesamtzahl der in der Mischung enthaltenen Moleküle, den höchsten Wert aufweist.

Überraschenderweise konnte im Rahmen der vorliegenden Erfindung gefunden werden, dass Organopolysiloxane der allgemeinen Formel I

$$CH_2{=}CH\text{-}SiR^1R^2O\text{-}(SiR^1R^2O)_nSiR^1R^2\text{-}CH{=}CH_2, \qquad (I)$$

worin $R^1$ und $R^2$ gleich oder verschieden sind und aus der Gruppe, welche aus Alkylgruppen, Arylgruppen, Aralkylgruppen, halogensubstitulerten Alkylgruppen, halogensubstituierten Arylgruppen, Cyanoalkylgruppen, Cycloalkylgruppen und Cycloalkenylgruppen, bspw. Bi- oder Tricyclen, besteht, ausgewählt sind, sowie n eine ganze Zahl zwischen 1 und 9 ist,

welche vorzugsweise einen Vinylgehalt von 0,7 bis 10, besonders bevorzugt von 0,8 bis 9 mmol/g aufweisen, keineswegs inhibierend auf die Hydrosilyllerungsreaktion wirken, sondern ausschließlich Organopolysiloxane der genannten allgemeinen Formel mit n gleich null. Nach den Erkenntnissen der vorliegenden Erfindung tritt die In dem Stand der Technik beschriebene Inhibition der Vernetzungsreaktion nur dann ein, wenn die Ausgangsstoffe, insbesondere die Organopolysiloxane gemäß obiger Formel, noch ein oder mehrere Organodisiloxane, insbesondere Divinylorganodisiloxane wie 1,3-Divinyldisiloxane, bspw. 1,3-Divinyltetraalkyldisiloxane bzw. 1,3-Divinyltetraalkyldisiloxan-Substrukturen, welche bei der Synthese der genannten Organopolysiloxane als Nebenprodukt entstehen und nur schwer destillativ abzutrennen sind, aufweisen. Entscheidend für eine nicht-inhibierende Wirkung der erfindungsgemäß einzusetzenden Organopolysiloxane ist daher, dass das Zweikomponenten-Siliconmaterial frei oder zumindest im Wesentlichen frei an Organodisiloxanen ist. Vorzugsweise weist das erfindungsgemäße Siliconmaterial einen Gehalt an Organodisiloxanen von weniger als 0,6 Gew.-%, besonders bevorzugt von weniger als 0,5 Gew.-%, ganz besonders bevorzugt von weniger als 0,1 Gew.-% und höchst bevorzugt von weniger als 0,01 Gew.-%, jeweils bezogen auf das Gesamtgewicht des Siliconmaterials, auf. Um diese Werte zu erreichen, werden vorzugsweise destillativ aufgereinigte und/oder durch Äquilibrierung bzw. Kondensation der Siloxanoligomere/-polymere hergestellte Ausgangsmaterialien eingesetzt. Vorzugsweise weist das bzw. die Organopolysiloxane a) jeweils zwei Vinylgruppen pro Molekül auf.

Des weiteren basiert die vorliegende Erfindung auf der für den Fachmann überraschenden und unerwarteten Erkenntnis, dass durch den erfindungsgemäßen Einsatz der genannten kurzkettigen Organopolysiloxane nicht nur keine Inhibition der Hydrosilylierungsreaktion eintritt, sondern vielmehr Siliconmaterialien mit ausgezeichneten mechanischen Eigenschaften erhalten werden können, welche zudem in einer für dentalmedizinische und dentaltechnische Anwendungen ausreichenden Zeit aushärten. Vorzugsweise beträgt die Shore D-Härte der erfindungsgemäßen Siliconmaterialien im ausvulkanisierten Zustand (24 Stunden nach der Aushärtung bei Mundtemperatur) mehr als 35, besonders bevorzugt mehr als 45 und ganz besonders bevorzugt mehr als 55 und/oder das Elastizitätsmodul, gemessen nach DIN 53457 oder 53455) mehr als 20 MPa, besonders bevorzugt mehr als 50 MPa und ganz besonders bevorzugt mehr als

100 MPa.

Das im 3-Punkt-Biegeversuch nach ISO 10477 ermittelte Elastizitätsmodul beträgt vorzugsweise mehr als 20 MPa, besonders bevorzugt mehr als 100 MPa und ganz besonders bevorzugt mehr als 200 MPa. Gleichzeitig beträgt die Abbindezeit (bei Mundtemperatur) vorzugsweise weniger als 10 Minuten und besonders bevorzugt weniger als 5 Minuten.

Als Reste $R^1/R^2$ der allgemeinen Formel I kommen alle dem Fachmann bekannten Alkylgruppen, insbesondere Methyl-, Ethyl- und Isopropylgruppen, Arylgruppen, insbesondere Phenyl-, Naphtyl-, Tolyl-, Xylylgruppen, Aralkylgruppen, insbesondere Benzyl-, Phenylethylgruppen, halogensubstituierte Alkyl- und Arylgruppen, insbesondere 3,3,3-Trifluorpropyl-, Chlorphenyl- und Difluorphenylgruppen, Cyanoalkylgruppen, Cycloalkylgruppen und Cycloalkenylgruppen, bspw. Bi- oder Tricyclen, In Betracht.

Vorzugsweise enthält das erfindungsgemäße Siliconmaterial 20 bis 80 Gew.-% und ganz besonders bevorzugt 25 bis 50 Gew.-%, bezogen auf die Gesamtmenge des Zweikomponenten-Siliconmaterials, eines Organopolysiloxans der allgemeinen Formel I.

Sofern das Zweikomponenten-Siliconmaterial eine Mischung aus zwei oder mehreren Organopolysiloxanen enthält, beträgt der Anteil an Organopolysiloxanen der allgemeinen Formel I, bezogen auf die Gesamtmenge an Organopolysiloxanen, mindestens 30 Gew.-%, besonders bevorzugt mindestens 50 Gew.-% und ganz besonders bevorzugt mindestens 70 Gew.-%. Der restliche Anteil kann aus einem oder mehreren Organopolysiloxanen mit zwei Vinylgruppen im Molekül und einer Viskosität zwischen 100 und 350.000 mPa·s bei 20 °C und/oder aus einem oder mehreren Organopolysiloxanen mit zwei Vinylgruppen im Molekül gemäß der allgemeinen Formel II

$$CH_2=CH\text{-}SiR^1R^2O\text{-}(SiR^1R^2O)_m\text{-}SiR^1R^2\text{-}CH=CH_2, \qquad (II)$$

worin $R^1$ und $R^2$ gleich oder verschieden sind und aus der Gruppe, welche aus Alkylgruppen, Arylgruppen, Aralkylgruppen, halogensubstituierten Alkylgruppen, halogensubstituierten Arylgruppen, Cyanoalkylgruppen, Cycloalkylgruppen und Cycloalkenylgruppen, bspw. Bi- oder Tricyclen, besteht, ausgewählt sind, sowie m eine ganze Zahl zwischen 10 und 69 ist,

bestehen.

Gemäß einer besonderen Ausführungsform der vorliegenden Erfindung enthält das Zweikomponenten-Siliconmaterial nur ein Organopolysiloxan, und zwar eines, welches der allgemeinen Formel I entspricht. Diese Siliconmaterialien wiesen im ausvulkanisierten Zustand besonders hohe Festigkeiten, vorzugsweise Shore D-Härten von mehr als 50, und/oder besonders hohe Elastizitätsmodule, vorzugsweise von mehr als 100 MPa, auf.

Erfindungsgemäß beträgt die Kettenlänge n des bzw. der Organopolysiloxane der allgemeinen Formel I, unabhängig davon, ob ein oder mehrere Organopolysiloxane, sowie unabhängig davon, ob neben einem oder mehreren Organopolysiloxanen der allgemeinen Formel I eines oder mehrere andere Organopolyslloxane eingesetzt werden, zwischen 1 und 9. Vorzugsweise beträgt die Kettenlänge n des bzw. der Organopolysiloxane der allgemeinen Formel I zwischen 1 und 7, besonders bevorzugt zwischen 1 und 5 und ganz besonders bevorzugt zwischen 1 und 3.

Siliconmaterialien mit besonders guten anwendungstechnischen Eigenschaften werden erhalten, wenn das erfindungsgemäße additionsvernetzende Zweikomponenten-Siliconmaterial als Organopolysiloxan gemäß der allgemeinen Formel I eines oder mehrere der folgenden Verbindungen enthält:

1.

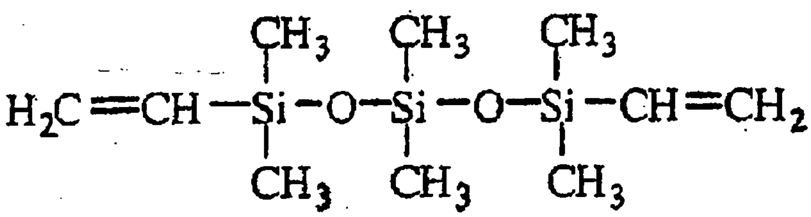

2.

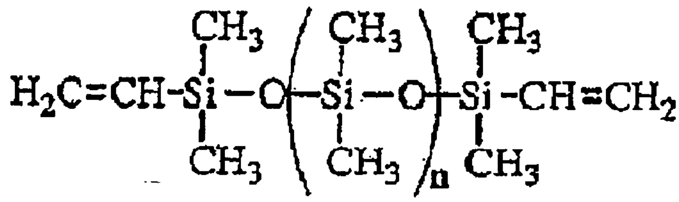

mit n zwischen 1 und 9,

3.

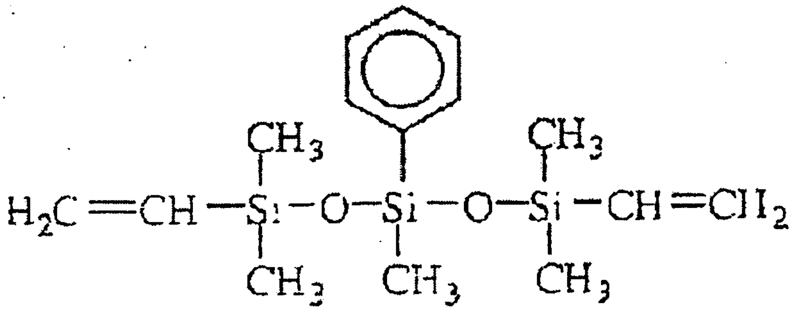

4.

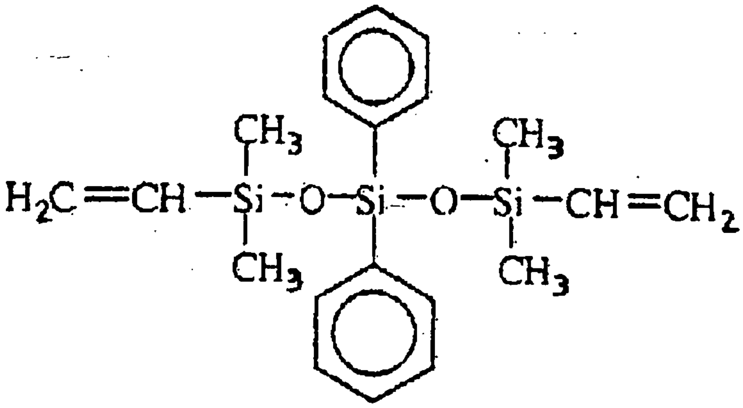

5.

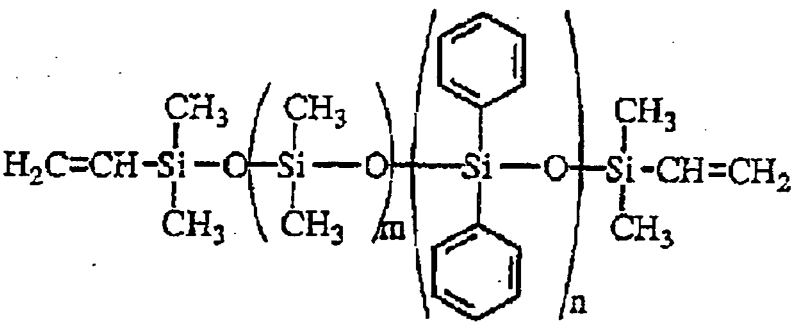

mit n zwischen 0 und 9, m zwischen 0 und 9 und n+m zwischen 1 und 9,

6.

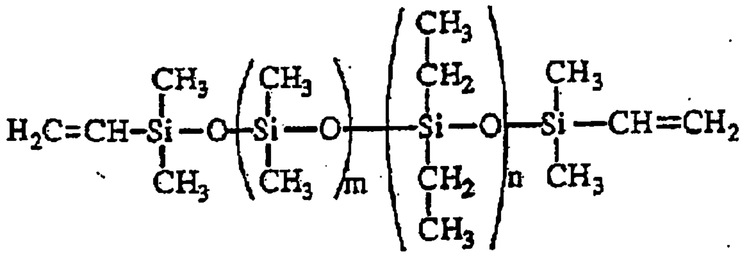

mit n zwischen 0 und 9, m zwischen 0 und 9 und n+m zwischen 1 und 9,
7.

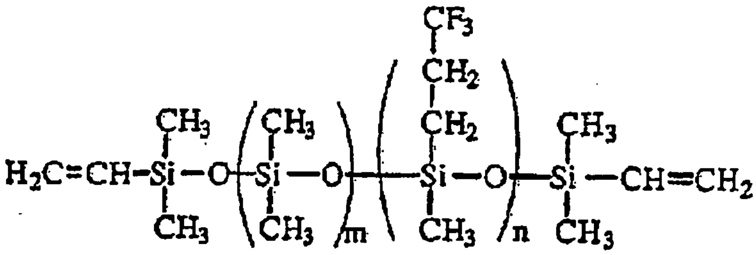

mit n zwischen 0 und 9, m zwischen 0 und 9 und n+m zwischen 1 und 9,
8.

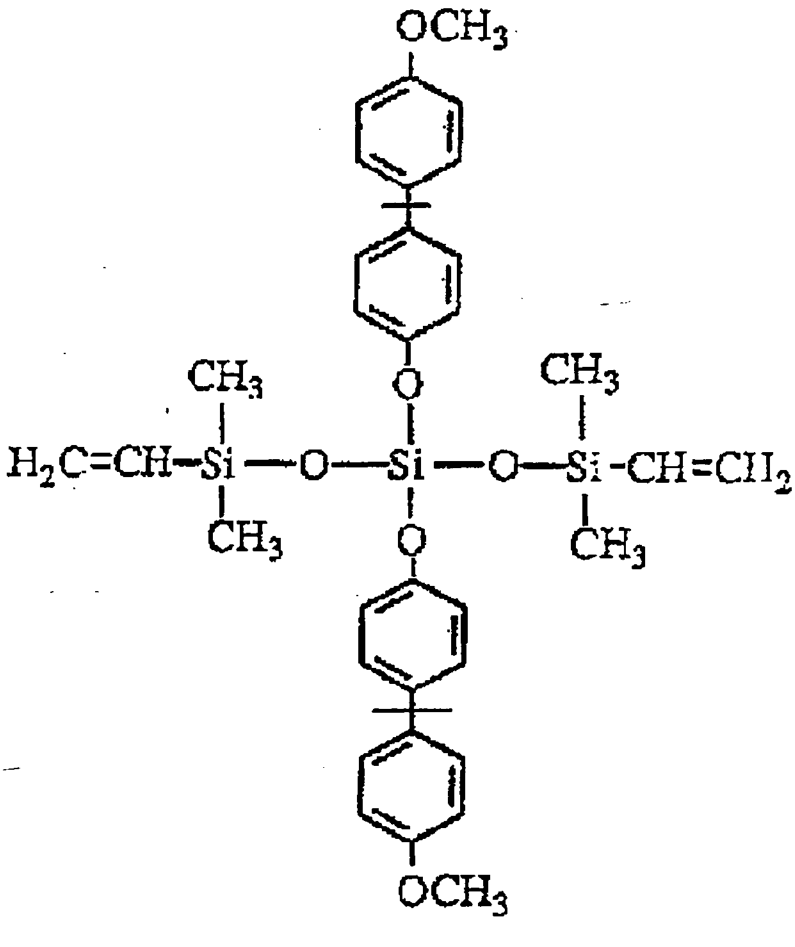

9.

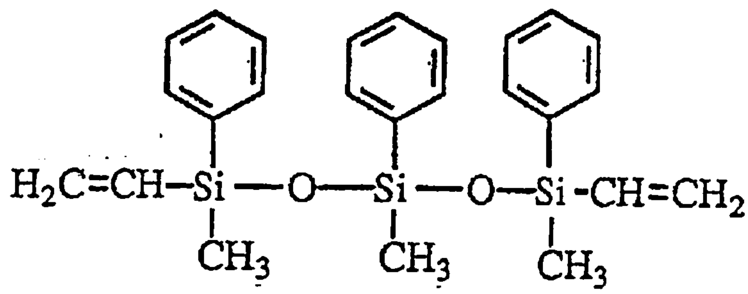

und

10.

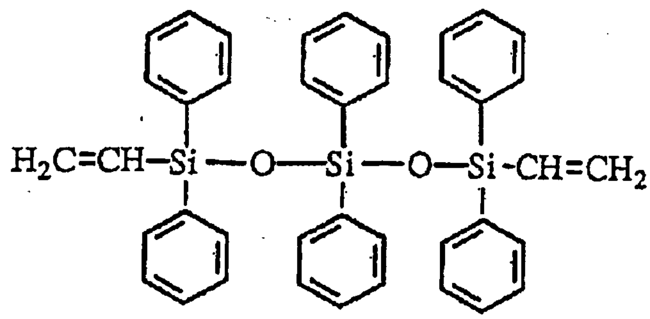

Als Vernetzer enthält das erfindungsgemäße Zweikomponenten-Siliconmaterial ein oder mehrere Organohydrogenpolysiloxane (Komponente b), wobei sich insbesondere Polyalkyl-, Polyaryl-, Polyaralkyl-, Polyhalogenalkyl-, Polyhalogenaryl- und Polyhalogenaralkyl-Siloxane, welche im Molekül mindestens zwei, bevorzugt mindestens 3 an Siliciumatome gebundene Wasserstoffatome aufweisen, als geeignet erwiesen haben. Vorzugsweise weist das bzw. die Organohydrogenpolysiloxane ein SiH-Gehalt von 1 bis 15 mmol/g, besonders bevorzugt von 4 bis 14 mmol/g und ganz besonders bevorzugt von 5 bis 13 mmol/g, auf.

Als Katalysatoren (Komponente c) für die Hydrosilylierung können alle dem Fachmann zu diesem Zweck bekannte Substanzen, insbesondere Salze, Komplexe und kolloidal vorliegende Formen der Übergangsmetalle der 8. Nebengruppe, vorzugsweise der Metalle Platin, Palladium und Rhodium, eingesetzt werden. Besonders bevorzugt enthalten die erfindungsgemäßen Zusammensetzungen als Katalysator Platinkomplexe, welche bspw. aus Hexachloroplatinsäure oder aus entsprechenden Platinsalzen hergestellt werden. Vorzugsweise befindet sich der Katalysator in der Komponente B, während der Vernetzer in der Komponente A des erfindungsgemäßen Zweikomponenten-Siliconmaterials enthaltern ist, um eine vorzeitige Aushärtung des Materials zu vermeiden.

Neben wenigstens einem Organopolysiloxan der allgemeinen Formel I, wenigstens einem Organohydrogenpolysiloxan, wenigstens einem Katalysator und ggf. einem oder mehreren längerkettigen Organopolysiloxanen können die erfindungsgemäßen Zweikomponenten-Siliconmaterialien zusätzlich eine oder mehrere Substanzen jeweils aus einer oder mehreren der folgenden Gruppen enthalten:

d) verstärkende Füllstoffe,
e) nicht-verstärkende Füllstoffe,
f) Farbstoffe,
g) Feuchtigkeitsbinder,
h) Inhibitoren,
i) vinylgruppenhaltige und/oder Si-H-gruppenhaltige MQ-Harze,
j) Compounds aus Organopolysiloxanen und verstärkenden Füllstoffen,
k) Tenside, Emulgatoren und/oder Stabilisatoren,
l) radioopake Substanzen,
m) $H_2$-absorbierende bzw. adsorbierende Substanzen und Substanzen, welche die $H_2$-Entwicklung eliminieren bzw. reduzieren,
n) die optische Lesbarkeit/Abtastung ermöglichende Verbindungen.

Diese Verbindungen können in Abhängigkeit von deren chemischen Natur der Komponente A und/oder der

Komponente B des erfindungsgemäßen Zweikomponenten-Siliconmaterials zugesetzt sein.

Als Komponente d) eignen sich insbesondere hochdisperse, aktive Füllstoffe mit einer BET-Oberfläche von mindestens 50 $m^2/g$, wie Titandioxid, Aluminiumoxid, Zinkoxid, Zirkonoxid und besonders bevorzugt nassgefällte oder pyrogen gewonnene Kieselsäure. Die genannten Substanzen können hydrophil oder hydrophobiert vorliegen. Des weiteren können als verstärkende Füllstoffe Nanopartikel und faser- oder blättchenförmige Füllstoffe eingesetzt werden, wobei mineralische, faserförmige Füllstoffe, wie bspw. Wollastonit und synthetische, faserförmige Füllstoffe, bspw. Glasfasern, Keramikfasern oder Kunststofffasern bevorzugt sind. Nanopartikel im Rahmen der vorliegenden Erfindung bezeichnet speziell hergestellte anorganische oder organische Pulver, deren mittlere Korngröße weniger als 100 Nanometer beträgt, wobei sie hinsichtlich ihrer Zusammensetzung mit konventionellen Materialien identisch sein können. Der Hauptunterschied liegt darin, dass Nanopartikel im Vergleich zu größeren Partikeln fast ebenso viele Atome auf der Oberfläche, wie im Inneren besitzen, so dass die Eigenschaften mit abnehmender Partikelgröße zunehmend durch Grenzflächeneffekte dominiert werden. Dadurch erhalten Nanopartikel nützliche Zusatzeigenschaften wie z.B. hinsichtlich der verstärkenden Eigenschaften, Lichtstreuvermögen und Schmelzverhalten. Nanopartikel sind herstellbar durch Sol-/Gel-Technologie und Fällungsmethoden sowie über elektrochemische Verfahren (EDOC-Verfahren: electrochemical deposition under oxidizing conditions; Fa. SusTech) und Plasma-Verfahren (Plasma and Joule Thompson quench; Fa. NanoProducts).

Ferner können die erfindungsgemäßen Zusammensetzungen einen oder mehrere nicht-verstärkende Füllstoffe, bevorzugt solche mit einer BET-Oberfläche von weniger als 50 $m^2/g$ (Schriftenreihe Pigmente Degussa Kieselsäuren, Nummer 12, Seite 5 sowie Nummer 13, Seite 3), enthalten, vorzugsweise ausgewählt aus der Gruppe, welche aus Metalloxiden, Metallhydroxiden, Metalloxidhydroxiden, Mischoxiden und Mischhydroxiden, besteht. Besonders bevorzugt sind Siliciumdioxid, insbesondere in Form von Quarz und seinen kristallinen Modifikationen, Quarzgut sowie, Quarzmehl, Cristobalit, Dentalgläser, Dentalkeramik, Aluminiumoxid, Calciumoxid und Aluminiumhydroxid. Auch Füllstoffe wie Calciumcarbonat, Kieselgur, Diatomenerde, Talkum und Füllstoffe auf Kunststoffbasis, beispielsweise Polymethylmethacrylat, Polycarbonat, Polyvinylchlorid, Siliconharzpulver, Pulver auf Basis fluororganischer Verbindungen sowie organische und anorganische Hohlkugeln, Massivkugeln und Fasern können-eingesetzt werden. Des weiteren können volle oder hohle Kunststoffteilchen, z. B. auch in sphärischer Form, auf deren Oberfläche anorganische Füllstoffpartikel eingebettet sind, verwendet werden. Vorzugsweise weisen die eingesetzte nicht-verstärkenden Füllstoffe eine mittlere Korngröße von $\geq 0{,}1\ \mu m$ (Ullmann Encyclopädie der Technischen Chemie, Band 21, Seite 523) auf.

Die unter d) und e) genannten Füllstoffe können auch oberflächenbehandelt (gecoated) vorliegen. Die Oberflächenbehandlung kann z. B. mit Silanen und Fettsäuren erfolgen, die funktionelle Gruppen (z. B. Vinyl-, Si-Vinyl-, Allyl-, -SiH, Acryl- und Methacryl-) aufweisen können.

Bei den unter f) genannten Farbstoffen handelt es sich um lösliche Farbstoffe oder um Pigmentfarbstoffe. Sofern die erfindungsgemäßen Siliconmaterialien für dentalmedizinische und dentaltechnische Anwendungen eingesetzt werden enthalten diese als Farbstoffe vorzugsweise Lebensmittelfarbstoffe und Eisenoxid-Dentalfarbstoffe. Des weiteren sind Farbpasten aus Polysiloxan- bzw. Mineralöl-Farbstoff-Formulierungen für diesen Zweck geeignet.

Als Feuchtigkeitsbinder g) können Zeolithe, wasserfreies Aluminiumsulfat, Molsieb, Kieselgur und Blaugel eingesetzt werden.

Als Inhibitoren können die erfindungsgemäßen Zweikomponenten-Siliconmaterialien alle Arten von Divinyldisiloxanen der allgemeinen Formel III

$$CH_2{=}CH\text{-}SiR_2O\text{-}SiR_2\text{-}CH{=}CH_2$$

worin R gleiche oder verschiedene, ggf. substituierten Kohlenwasserstoffreste, wie Alkyl-, Alkenyl- und Alkinylgruppen, bezeichnet,

enthalten. Besonders bevorzugt werden als Inhibitoren Divinyltetraalkyldisiloxane und Divinyltetramethyldisiloxan eingesetzt. Alternativ oder zusätzlich dazu können auch vinylgruppenhaltige cyclische Siloxane, bspw. Tetravinyltetramethylcyclotetrasiloxan, oder endständige Doppel- oder Dreifachbindungen enthaltende organische Hydroxylverbindungen, z.B. Ethinylcyclohexanol, als Inhibitoren eingesetzt werden.

Die unter i) genannten vinyl- und Si-H-gruppenhaltigen, festen oder flüssigen MQ-Harze sind dadurch gekennzeichnet, dass sie als Q-Einheit das tetrafunktionelle $SiO_{4/2}$ und als M-Bausteine das monofunktionelle $R_3SiO_{1/2}$, wobei R = Vinyl-, Methyl-, Ethyl-, Phenyl- sein kann, enthalten. Darüber hinaus können auch noch als T-Einheiten das trifunktionelle $RSiO_{3/2}$ und als D-Einheiten das bifunktionelle $R_2SiO_{2/2}$ mit der gleichen Bedeutung für R wie oben genannt, vorhanden sein. Diese MQ-Harze können in Organopolysiloxanen mit zwei oder mehr Vinylgruppen im Molekül und einer Viskosität von 21 bis 350.000 MPa·s gelöst vorliegen. Der Vinylgruppengehalt der genannten MQ-Harze liegt vorzugsweise im Bereich von 0,1 bis 8 mmol/g und der Ethoxygruppengehalt liegt bei kleiner 4 mmol/g. Ferner sollte der SiOH-Gehalt der MQ-Harze so niedrig liegen, dass kein Gasen durch Wasserstoffentwicklung auftritt. Auch der Anteil an flüchtigen Bestandteilen der MQ-Harze sollte möglichst gering sein, damit die Dimensionsstabilität nicht beeinträchtigt wird.

Die gegebenenfalls eingesetzten Compounds j) sind bevorzugt aus Organopolysiloxanen mit zwei oder mehr Vinylgruppen im Molekül und einer Viskosität von 21 bis 350.000 MPa·s sowie den unter d) genannten verstärkenden Füllstoffen zusammengesetzt. Besonders bevorzugt werden unter Verwendung von Modifizierhilfsmitteln, z. B. Hexamethyldisalazan *in situ* hydrophobierte, Compounds eingesetzt.

Bei den ggf. als Tensid, Emulgator und/oder Stabilisator eingesetzten Komponenten k) kann es sich um anionische Tenside, insbesondere Alkylsulfate, Alkylbenzolsulfonate und -phosphate, kationische Tenside, insbesondere Tetraalkylammoniumhalogenide, nichtionische Tenside, insbesondere Alkyl- und Alkylphenyl-Polyalkylalkylenoxide und deren Alkylether und Alkylester, Fettsäurealkylolamide, Saccharosefettsäureester, Trialkylaminoxide, Silicontenside oder Fluortenside sowie amphotere Tenside, insbesondere sulfatierte oder oxyethylierte Kondensationsprodukte aus Alkylenphenolen und Formaldehyd, Ethylenoxid-Propylenoxid-Blockpolymerisate und modifizierte Polysiloxane handeln. Ferner können die Tenside auch funktionelle Gruppen, wie z. B.-OH-, $-CH=CH_2$, $-OCO-(CH_3)C=CH_2$ und SiH enthalten. Darüber hinaus können selbstverständlich, wenn auch nicht bevorzugt, alle andere dem Fachmann zu diesem Zweck bekannte Verbindungen eingesetzt werden.

Als radioopake Substanzen l) können die erfindungsgemäßen Zweikomponenten-Siliconmaterialien bspw. barium-, strontium-, lanthan- oder zinkhaltige Gläser, Bariumsulfat, Zirkondioxid, Lanthanoxid oder keramische Füllstoffzusammensetzungen, welche Oxide von Lanthan, Hafnium und Seltenerdmetallen enthalten, aufweisen. Des weiteren können komplexe Schwermetallfluoride der allgemeinen Formel $M^{II}M^{IV}F_6$ oder $YF_3$ für diesen Zweck eingesetzt werden, wobei M" insbesondere ein Calcium-, Strontium- oder Bariumion und $M^{IV}$ insbesondere ein Titan-, Zirkon- oder Hafniumion sein kann. Ferner können als radioopake Substanzen am Siliconpolymer gebundene Atome bzw. Atomgruppen, die radioopake Eigenschaften besitzen, bspw. an Silicium gebundenes Jod, eingesetzt werden.

Bei den unter m) genannten $H_2$-Absorbern/Adsorbern handelt es sich vorzugsweise um feinverteiltes Palladium oder Platin bzw. deren Legierungen, die ggf. in Alumosilikaten enthalten sind. Weiterhin sind auch Substanzen einsetzbar, welche die $H_2$-Entwicklung eliminieren bzw. reduzieren, bspw. z. B. 3-Methyl-1-butin-3-ol und $CH_3Si[O-C(CH_3)_2-C{\equiv}CH]_3$.

Als die optische Lesbarkeit/Abtastung ermöglichende Verbindungen n) können alle dem Fachmann zu diesem Zweck bekannte Substanzen, insbesondere Metallpulver, Metallpigmente, Metallicpigmente und Titandioxid, eingesetzt, welche je nach deren chemischen Natur der Komponente A und/oder der Komponente B zugesetzt werden.

Vorzugsweise enthält das erfindungsgemäße Siliconmaterial, d. h. das Gemisch aus den beiden Komponenten des additionsvernetzenden 2-Komponenten-Systems, die nachstehend aufgeführten Substanzen in den jeweils angegebenen Mengenbereichen in Gew.-%, bezogen auf das gesamte Siliconmaterial:

$a_1$) 10 bis 90 Gew.-%, vorzugsweise 10 bis 60 Gew.-% wenigstens eines Organopolysiloxans der allgemeinen Formel I mit mindestens zwei Vinylgruppen im Molekül und einem Si-Vinylgehalt von 0,7 bis 10 mmol/g, bevorzugt einem Si-Vinylgehalt von 0,8 bis 9 mmol/g,

$a_2$) 0 bis 80 Gew.-%, vorzugsweise 0 bis 50 Gew.-% wenigstens eines Organopolysiloxans mit zwei Vinylgruppen im Molekül und einer Viskosität zwischen 100 und 350.000 mPa·s bei 20 °C und/oder wenigstens eines Organopolysiloxans der allgemeinen Formel II,

b) 1 bis 90 Gew.-%, vorzugsweise 10 bis 60 Gew.-% eines Organohydrogenpolysiloxans mit mindestens zwei, besonders bevorzugt mindestens 3 SiH-Gruppen und einem SiH-Gehalt von 0,1 bis 15 mmol/g, besonders bevorzugt von 4 bis 14 mmol/g und ganz besonders bevorzugt von 6 bis 13 mmol/g,

c) 0,0001 bis 0,1 Gew.-%, vorzugsweise 0,0005 bis 0,05 Gew.-% wenigstens eines Katalysators zur Beschleunigung der Hydrosilylierungsreaktion, bezogen auf reines Metall,

d) 0 bis 80 Gew.-%, vorzugsweise 0 bis 70 Gew.-% und besonders bevorzugt 0,5 bis 50 Gew.-% an verstärkenden Füllstoffen,

e) 0 bis 90 Gew.-%, vorzugsweise 0 bis 80 Gew.-% und besonders bevorzugt 0,1 bis 75 Gew.-% an nicht verstärkenden Füllstoffen,

f) 0 bis 5 Gew.-%, vorzugsweise 0 bis 2 Gew.-% wenigstens eines Farbstoffes,

g) 0 bis 30 Gew.-%, vorzugsweise 0 bis 5 Gew.-% an Feuchtigkeitsbinder,

h) 0 bis 1 Gew.-%, vorzugsweise 0 bis 0,6 und besonders bevorzugt 0 bis 0,01 Gew.-% an Inhibitoren,

i) 0 bis 80 Gew.-%, vorzugsweise 0 bis 50 Gew.-% wenigstens eines vinylgruppenhaltigen MQ-Harzes,

j) 0 bis 80 Gew.-%, vorzugsweise 0 bis 50 Gew.-% an Compounds aus vinylgruppenhaltigen Organopolysiloxanen und verstärkenden Füllstoffen,

k) 0 bis 10 Gew.-%, vorzugsweise 0 bis 5 Gew.-% an Tensiden, Emulgatoren und/oder Stabilisatoren,

l) 0 bis 90 Gew.-%, vorzugsweise 0 bis 80 Gew.-% an radioopaken Substanzen,

m) 0 bis 20 Gew.-%, vorzugsweise 0 bis 10 Gew.-% an $H_2$-Absorbern/Adsorbern oder an die H2-Entwicklung reduzierenden bzw. eliminierenden Substanzen, sowie

n) 0 bis 20 Gew.-%, vorzugsweise 0 bis 10 Gew.-% an die optische Lesbarkeit/Abtastung ermöglichende Verbindungen.

Die erfindungsgemäßen Zweikomponenten-Siliconmaterialien zeichnen sich im ausvulkanisierten Zustand durch eine hohe Shore D-Endhärte und/oder durch ein großes Elastizitätsmodul, bei gleichzeitig kurzer Abbindezeit aus. Insbesondere auch wegen ihrer hervorragenden Hydrolysebeständigkeit eignen sich diese Zusammensetzungen daher für alle dentalmedizinischen und dentaltechnischen Anwendungen, in denen eine hohe Endhärte und eine geringe Elastizität des Materials gefordert ist. Insbesondere eignen sich die erfindungsgemäßen Materialien zur Bissregistrierung, als Zement, als provisorische Kronen, als Brückenmaterial, als provisorisches sowie als dauerhaftes Füllmaterial.

Im folgenden wird die Erfindung anhand von den Erfindungsgedanken demonstrierenden, diesen jedoch nicht einschränkenden Beispielen erläutert.

**Synthesebeispiel 1**

(Synthese von 1,5-Divinyl-3,3-diphenyl-1,1,5,5-tetramethyltrisiloxan [$ViMe_2SiO)_2$ $Ph_2Si$])

<u>1. Syntheseschritt:</u> Synthese von Vinyldimethylacetoxysilan ($ViMe_2SiOAc$)

Es wurde Natriumacetat vorgelegt und mit trockenem Tetraglyme aufgeschlämmt, bevor jeweils 3 mal evakuiert und mit Stickstoff begast wurde. Unter Stickstoffatmosphäre wurde 1 mol Vinyldimethylchlorsilan langsam zugetropft, wobei die Temperatur von RT auf ca. 50°C anstieg. Nach 2 h Rühren bei 60 °C wurde der zu zähe Ansatz weiter mit Tetraglyme verdünnt. Eine direkte Destillation aus dem Ansatz bei einer Kopftemperatur von 120°C (900 mbar) bis 60 °C (50 mbar) ergab 380g Destillat. Eine Gaschromatographieanalyse ergab, dass das Destillat 75 % Vinyldimethylacetoxysilan und 18 % Divinyltetramethyldisiloxan - entsprechend einer Ausbeute von 72 % der Theorie - enthielt.

<u>2. Syntheseschritt:</u> Synthese von $(ViMe_2SiO)_2$ $Ph_2Si$

Es wurden 1 mol $ViMe_2SiOAc$ und 0.48 mol $Ph_2Si(OMe)_2$ als Silane vorgelegt und dieser Mischung HCl (10 %) bei RT unter starkem Rühren langsam zugetropft, wobei die Temperatur langsam auf 55 °C anstieg. Nach anschließendem Aufheizen der Mischung auf 72 °C zum Rückfluss für 10 min und langsamen Abkühlen auf RT ergab sich eine zweiphasige Mischung. Die Oberphase wurde abgetrennt und mit 1x $H_2O$, 1 x $NaHCO_3$-Lsg., 3x $H_2O$ gewaschen. Nach Trocknung mit Molsieb und Filtrierung wurde destilliert, wobei Methylacetat und Divinyltetramethyldisiloxan in Vorfraktionen übergingen und das Produkt bei 5 mbar und 160 °C - entsprechend einer Ausbeute von 70 % der Theorie - destillierte.

**Synthesebeispiel 2**

(Synthese von Tetrakis(vinyldimethylsiloxy)silan)

Es wurden 2 mol $ViMe_2SiOAc$ und 0.48 mol $Si(OEt)_4$ als Silane vorgelegt und dieser Mischung HCl (10 %) bei RT unter starkem Rühren langsam zugetropft, wobei die Temperatur langsam auf 55 °C anstieg. Nach anschließendem Aufheizen der Mischung auf 72 °C zum Rückfluss für 10 min und langsamen Abkühlen auf RT ergab sich eine zweiphasige Mischung. Die Oberphase wurde abgetrennt und mit 1 x $H_2O$, 1 x $NaHCO_3$-Lsg., 3 x $H_2O$ gewaschen. Nach Trocknung mit Molsieb und Filtrierung wurde destilliert, wobei Methylacetat und Divinyltetramethyldisiloxan in Vorfraktionen übergingen und das Produkt - entsprechend einer Ausbeute von 72 % der Theorie - destillierte.

**Synthesebeispiel 3**

(Synthese von Tris(vinyldimethylsiloxy)methylsilan)

Es wurden 1,5 mol $ViMe_2SiOAc$ und 0.48 mol $MeSi(OEt)_3$ als Silane vorgelegt und der Mischung HCl (10 %) bei RT unter starkem Rühren langsam zugetropft, wobei die Temperatur langsam auf 55 °C anstieg. Nach anschließendem Aufheizen auf 72 °C zum Rückfluss für 10 min und langsamen Abkühlen auf RT ergab sich eine zweiphasige Mischung. Die Oberphase wurde abgetrennt und mit 1 x $H_2O$, 1 x $NaHCO_3$-Lsg., 3 x $H_2O$ gewaschen. Nach Trocknung mit Molsieb und Filtrierung wurde destilliert, wobei Methylacetat und Divinyltetramethyldisiloxan in Vorfraktionen übergingen und das Produkt - entsprechend einer Ausbeute von 72 % der Theorie - destillierte.

**Synthesebeispiel 4**

(Synthese von Tetrakis(dimethylsiloxy)silan)

1. Syntheseschritt: Synthese von Dimethylacetoxysilan [$HMe_2SiOAc$])

Es wurden 1,03 mol Natriumacetat vorgelegt, mit Ethylbenzol aufgeschlämmt, dreimal evakuiert und mit Stickstoff gespült. Anschließend wurden 1 mol Dimethylchlorsilan zugetropft, wobei die Temperatur von RT auf etwa 60 °C anstieg. Nach Rühren für 2 h bei 60°C wurde direkt aus dem Ansatz destilliert. Bei Normaldruck und einer Kopftemperatur von 83-95 °C ging eine Fraktion über, die 70 % Produkt - entsprechend einer Ausbeute von 59 % der Theorie - enthielt.

2. Syntheseschritt: Synthese von Tetrakis(dimethylsiloxy)silan ("SiH-Stern")

Es wurden 1 mol Tetraethoxysilan (208,3 g) und 4.2 mol Dimethylacetoxysilan (496 g) als Silane vorgelegt und dieser Mischung 70 g 10 %-ige Salzsäure mittelschnell zugetropft. Dabei stieg die Temperatur der Mischung zunächst von RT langsam auf 56 °C und fing dann an zu Sieden, bevor diese weiter auf 71 °C anstieg und die Mischung trübe wurde. Nach Zugabe der Salzsäure kühlte der Ansatz langsam auf RT ab. Die entstandene Unterphase wurde abgetrennt und die Oberphase 1x mit Wasser, 1x mit $NaHCO_3$-Lsg. und 3x mit Wasser gewaschen. Nach Trocknen über Molsieb und Filtrieren wurde destilliert, wobei folgende Fraktionen erhalten wurden:

1. Fraktion: Ethylacetat bei 1013 mbar/58°C,
2. Fraktion: TMDSO bei 160 mbar/80°C,
3. Fraktion: Produkt bei 160 mbar/130°C, entsprechend einer Ausbeute von 85 % der Theorie.

**Beispiel 1**

In einem geschlossenen Kneter wurden 125 Teile 1,5-Divinyl-3,3-diphenyltetramethyltrisiloxan mit 330 Teilen Quarzmehl mit einer mittleren Korngröße von 10 μm, 15 Teilen einer pyrogen hergestellten, hochdispersen, hydrophobierten Kieselsäure mit einer Oberfläche von 200 $m^2/g$ nach BET sowie 2 Teilen eines Platin-Katalysators mit einem Gehalt an reinem Platin von 1 % für 1,5 Stunden homogen gemischt und danach 15 Minuten im Vakuum entgast.

Es wurde eine mittelfließende Paste (ISO 4823, vormals DIN EN 24823) erhalten. Die Paste stellt die Komponente A des erfindungsgemäßen Zweikomponenten-Siliconmaterials gemäß eines ersten Ausführungsbeispiels dar. Nach einer Lagerung bei 23 °C über 1 Monat waren die Viskosität und die Reaktivität im Sollbereich.

**Beispiel 2**

In einem geschlossenen Kneter wurden 100 Teile 1,5-Divinyl-3,3-diphenyltetramethyltrisiloxan mit 40 Teilen eines Polymethylhydrogensiloxans mit einer Viskosität von 30 mPa·s und einem SiH-Gehalt von 9,3 mmol/g, 350 Teilen Quarzmehl sowie 15 Teilen einer pyrogen hergestellten, hochdispersen, hydrophobierten Kieselsäure mit einer Oberfläche von 200 $m^2/g$ nach BET für 1,5 Stunden homogen gemischt und danach 15 Minuten im Vakuum entgast.

Es wurde eine mittelfließende Paste (ISO 4823) erhalten. Die Paste stellt die Komponente B des erfindungsgemäßen Zweikomponenten-Siliconmaterials dar. Nach einer Lagerung über 1 Monat bei 23 °C waren die Viskosität und die Reaktivität im Sollbereich.

**Beispiel 3**

50 Teile der in Beispiel 1 beschriebenen Komponente A und 50 Teile der in Beispiel 2 beschriebenen Komponente B wurden aus einer Kartusche (Fa. Mixpac) ausgedrückt und über einen statischen Mischer (Fa. Mixpac) homogen gemischt.

Das Produkt blieb ca. 30 Sekunden bei Raumtemperatur verarbeitbar und härtet bei einer Temperatur von 35 °C innerhalb von etwa 10 Minuten nach Mischbeginn aus. Als Vulkanisat wurden harte, schwer komprimierbare Formkörper erhalten, welche fräsbar waren. Mit dem Shore D-Durometer 3100 der Firma Zwick wurde eine Shore D-Härte von 86 bestimmt.

Das Elastizitätsmodul betrug im Zugversuch (DIN 53455), gemessen nach 2 Stunden bei 37 °C, 398 MPa. Als Probekörper wurde ein S2-Schulterstab nach DIN 53455 verwendet und das Elastizitätsmodul als Sekantenmodul zwischen 0,1 und 0,8 % Dehnung/Stauchung nach folgender Gleichung berechnet:

$$E = [R\ (0{,}8\ \%) - R\ (0{,}1\ \%)]\ /\ (0{,}8\ \% - 0{,}1\ \%).$$

**Beispiel 4**

In einem geschlossenen Kneter wurden 33 Teile 1,5-Divinylhexamethyltrisiloxan mit 64 Teilen Quarzmehl mit einer mittleren Korngröße von 10 μm, 2 Teilen einer pyrogen hergestellten, hochdispersen, hydrophobierten Kieselsäure mit einer Oberfläche von 200 $m^2$/g nach BET sowie 1 Teil eines Platin-Katalysators mit einem Gehalt an reinem Platin von 1 % für 1,5 Stunden homogen gemischt und danach 15 Minuten im Vakuum entgast.

Es wurde eine mittelfließende Paste (ISO 4823) erhalten. Die Paste stellt die Komponente A des erfindungsgemäßen Zweikomponenten-Siliconmaterials gemäß eines zweiten Ausführungsbeispiels dar. Nach einer Lagerung bei 23 °C über 1 Monat waren die Viskosität und die Reaktivität im Sollbereich.

**Beispiel 5**

In einem geschlossenen Kneter wurden 39 Teile eines Polymethylhydrogensiloxans mit einer Viskosität von 30 mPa·s und einem SiH-Gehalt von 9,3 mmol/g, 60 Teile Quarzmehl sowie 1 Teil einer pyrogen hergestellten, hochdispersen, hydrophobierten Kieselsäure mit einer Oberfläche von 200 $m^2$/g nach BET für 1,5 Stunden homogen gemischt und danach 15 Minuten im Vakuum entgast.

Es wurde eine mittelfließende Paste (ISO 4823) erhalten. Die Paste stellt die Komponente B des erfindungsgemäßen Zweikomponenten-Siliconmaterials dar. Nach einer Lagerung über 1 Monat bei 23 °C waren die Viskosität und die Reaktivität im Sollbereich.

**Beispiel 6**

50 Teile der in Beispiel 4 beschriebenen Komponente A und 50 Teile der in Beispiel 5 beschriebenen Komponente B wurden aus einer Kartusche (Fa. Mixpac) ausgedrückt und über einen statischen Mischer (Fa. Mixpac) homogen gemischt.

Das Produkt blieb ca. 30 Sekunden bei Raumtemperatur verarbeitbar und härtet bei einer Temperatur von 35 °C innerhalb von etwa 4 Minuten nach Mischbeginn aus. Als Vulkanisat wurden harte, schwer komprimierbare Formkörper erhalten, welche gut fräsbar waren. Mit dem Shore D-Durometer 3100 der Firma Zwick wurde nach 2 Stunden bei 37 °C eine Shore D-Härte von 68 bestimmt.

Das Elastizitätsmodul betrug im Zugversuch (DIN 53455), gemessen nach 2 Stunden bei 37 °C, 119 MPa. Die Bestimmung und Berechnung des Elastizitätsmoduls erfolgte wie in Beispiel 3 beschrieben.

Aus diesem Beispiel geht hervor, dass Divinyltrisiloxan keineswegs, wie in dem Stand der Technik beschrieben, als Inhibitor wirkt, sondern vielmehr zur Vernetzung zu den erfindungsgemäßen, harten Siliconmaterialien bei Raum- und Mundtemperatur geeignet ist.

**Beispiel 7**

In einem geschlossenen Kneter wurden 59 Teile 1,5-Divinyl-3,3-diphenyl-1,1,5,5-tetramethyltrisiloxan aus Synthesebeispiel 1, 40 Teile einer pyrogen hergestellten, hochdispersen, hydrophobierten Kieselsäure mit einer BET-Oberfläche von 170 $m^2$/g und ein Teil eines Platin-Katalysators mit einem Gehalt an reinem Platin von 1 %, für 1,5 Stunden homogenisiert und danach 15 Minuten im Vakuum entgast.

Es wurde eine transparente, mittelfließende Paste (ISO 4823) erhalten. Die Paste stellt die Komponente A des erfindungsgemäßen Zweikomponenten-Siliconmaterials gemäß eines dritten Ausführungsbeispiels dar. Nach einer Lagerung bei 23 °C über einen Monat waren die Viskosität und die Reaktivität im Sollbereich.

**Beispiel 8**

In einem geschlossenen Kneter wurden fünf Teile 1,5-Divinyl-3,3-diphenyl-1,1,5,5-tetramethyltrisiloxan aus Synthesebeispiel 1 mit 72 Teilen eines Polymethylhydrogensiloxans mit einer Viskosität von 30 mPa·s (gemessen bei 20°C) und einem SiH-Gehalt von 9,3 mmol/g mit 30 Teilen einer pyrogen hergestellten, hochdispersen, hydrophobierten Kieselsäure, mit einer BET-Oberfläche von 170 $m^2/g$ für 1,5 Stunden homogenisiert und danach 15 Minuten im Vakuum entgast.

Es wurde eine transparente, mittelfließende Paste (ISO 4823) erhalten. Die Paste stellt die Komponente B des erfindungsgemäßen Zweikomponenten-Siliconmaterials dar.

Nach einer Lagerung bei 23 °C über einen Monat waren die Viskosität und die Reaktivität im Sollbereich.

**Beispiel 9**

50 Teile der in Beispiel 7 beschriebenen Komponente A und 50 Teile der in Beispiel 8 beschriebenen Komponente B wurden aus einer Kartusche (Fa. Mixpac) ausgedrückt und über einen statischen Mischer (Fa. Mixpac) homogen gemischt.

Das Produkt blieb ca. 60 Sekunden bei Raumtemperatur verarbeitbar und härtete bei einer Temperatur von 35 °C innerhalb von etwa vier Minuten nach Mischbeginn vollständig aus. Als Vulkanisat wurden transparente, harte, schwer komprimierbare Formkörper erhalten, welche fräsbar waren.

Nach 24 Stunden Lagerung der Probekörper in Wasser bei 37°C wurden folgende mechanischen Eigenschaften ermittelt:

| | |
|---|---|
| Shore D-Härte (DIN 53505): | 86 |
| Elastizitätsmodul im 3-Punkt-Biegeversuch (ISO 10477): | 224 MPa |
| Biegefestigkeit (ISO 10477): | 6,7 MPa |

Jeder der zuvor genannten Messwerte ist ein Mittelwert aus der Prüfung von fünf Prüfkörpern.

Das Elastizitätsmodul im 3-Punkt-Biegeverversuch wurde als Sekantenmodul zwischen 0,05% und 0,25% Biegung nach folgender Formel berechnet:

$$\text{E-Modul} = [L_V^3 * (X_H - X_L)] / (4 * \text{delta-L} * b_0 * a_0^3)$$

Die Biegefestigkeit wurde nach folgender Formel berechnet:

$$\text{Biegefestigkeit} = [(1{,}5 * L_V) / (b_0 * a_0^2)] * F,$$

wobei

| | |
|---|---|
| $a_0$ : | Probendicke |
| $b_0$ : | Probenbreite |
| $L_V$ : | Stützweite |
| $X_H$: | Kraft bei Ende der E-Modul-Ermittlung |
| $X_L$: | Kraft zu Beginn der E-Modul-Ermittlung |
| delta-L: | Durchbiegung zwischen $X_H$ und $X_L$ |
| F: | Kraft bei Bruch der Probe |

Als Probekörper wurde eine Flach-/Streifenprobe mit folgenden Abmessungen verwendet:

Probendicke $a_0$ = 2 mm, Probenbreite $b_0$ = 2 mm, Probenlänge = 25 mm.

Die Stützweite betrug Lv = 20 mm.

**Beispiel 10**

In einem geschlossenen Kneter wurden 30 Teile 1,5-Divinyl-1,1,3,3,5,5-hexamethyltrisiloxan mit 67 Teilen Quarzmehl mit einer mittleren Korngröße von 10 µm, zwei Teilen einer pyrogen hergestellten, hochdispersen, hydrophobierten Kieselsäure mit einer BET-Oberfläche von 170 $m^2/g$ und ein Teil eines Platin-Katalysators mit einem Gehalt an reinem Platin von 1 % für 1,5 Stunden homogenisiert und danach 15 Minuten im Vakuum entgast.
Es wurde eine mittelfließende Paste (ISO 4823) erhalten. Die Paste stellt die Komponente A des erfindungsgemäßen Zweikomponenten-Siliconmaterials gemäß eines vierten Ausführungsbeispiels dar. Nach einer Lagerung bei 23°C über einen Monat waren die Viskosität und die Reaktivität im Sollbereich.

**Beispiel 11**

In einem geschlossenen Kneter wurden 34 Teile eines Polymethylhydrogensiloxans mit einer Viskosität von 30 mPa·s (gemessen bei 20°) und einem SiH-Gehalt von 9,3 mmol/g, 64 Teilen Quarzmehl und 2 Teilen einer pyrogen hergestellten, hochdispersen, hydrophobierten Kieselsäure, mit einer BET-Oberfläche von 170 $m^2/g$ für 1,5 Stunden homogenisiert und danach 15 Minuten im Vakuum entgast.
Es wurde eine mittelfließende Paste (ISO 4823) erhalten. Die Paste stellt die Komponente B des erfindungsgemäßen Zweikomponenten-Siliconmaterials dar. Nach einer Lagerung bei 23°C über einen Monat waren die Viskosität und die Reaktivität im Sollbereich.

**Beispiel 12**

50 Teile der in Beispiel 10 beschriebenen Komponente A und 50 Teile der in Beispiel 11 beschriebenen Komponente B wurden aus einer Kartusche (Fa. Mixpac) ausgedrückt und über einen statischen Mischer (Fa. Mixpac) homogen gemischt.
Das Produkt blieb ca. 30 Sekunden bei Raumtemperatur verarbeitbar und härtete bei einer Temperatur von 35 °C innerhalb von etwa drei Minuten nach Mischbeginn vollständig aus. Als Vulkanisat wurden harte, schwer komprimierbare Formkörper erhalten, welche gut fräsbar waren.
Nach 24 Stunden Lagerung der Probekörper in Wasser bei 37°C wurden folgende mechanischen Eigenschaften ermittelt:

| | |
|---|---|
| Shore D-Härte (DIN 53505): | 82 |
| Elastizitätsmodul im 3-Punkt-Biegeversuch (ISO 10477): | 956 MPa |
| Biegefestigkeit (ISO 10477): | 15,6 MPa |

Die Bestimmung und Berechnung des Elastizitätsmoduls im 3-Punkt-Biegeversuch und der Biegefestigkeit erfolgte wie in Beispiel 9 beschrieben.

**Vergleichsbeispiel 1**

In einem Kneter wurden 42 Teile 1,3-Divinyltetramethyldisiloxan, 55 Teile Quarzmehl mit einer Korngröße von 10 µm, 2 Teile einer pyrogen hergestellten, hochdispersen, hydrophobierten Kieselsäure mit einer Oberfläche von 200 $m^2/g$ nach BET sowie 1 Teil eines Platin-Katalysators mit einem Gehalt an reinem Platin von 1 % für 1,5 Stunden homogen gemischt und danach 15 Minuten im Vakuum entgast.
Es wurde eine mittelfließende Paste (ISO 4823) erhalten. Die Paste stellt die Komponente A eines nicht erfindungsgemäßen Zweikomponenten-Siliconmaterials dar. Nach einer Lagerung über 1 Monat bei 23 °C waren die Viskosität und die Reaktivität im Sollbereich.

**Vergleichsbeispiel 2**

In einem Kneter würden 34 Teile eines Polymethylhydrogensiloxans mit einer Viskosität von 30 mPa·s und einem SiH-Gehalt von 9,3 mmol/g, 64 Teile Quarzmehl sowie 2 Teile einer pyrogen hergestellten, hochdispersen, hydrophobierten Kieselsäure mit einer Oberfläche von 200 $m^2/g$ nach BET für 1,5 Stunden homogen gemischt und danach 15 Minuten im Vakuum entgast.
Es wurde eine mittelfließende Paste (ISO 4823) erhalten. Die Paste stellt die Komponente B eines nicht erfindungsgemäßen Zweikomponenten-Siliconmaterials dar. Nach einer Lagerung über 1 Monat bei 23 °C waren die Viskosität und die Reaktivität im Sollbereich.

**Vergleichsbeispiel 3**

33 Teile der in Vergleichsbeispiel 1 beschriebenen Komponente A und 67 Teile der in Vergleichsbeispiel 2 beschriebenen Komponente B wurden aus einer Kartusche (Fa. Mixpac) ausgedrückt und über einen statischen Mischer (Fa. Mixpac) homogen gemischt.

Das Produkt band innerhalb von 1,5 Stunden langsam ab. Als Vulkanisat wurden harte, schwer komprimierbare Formkörper erhalten. Mit dem Shore D-Durometer 3100 der Firma Zwick wurde nach 2 Stunden bei 37 °C eine Shore D-Härte von 60 bestimmt.

Das Elastizitätsmodul betrug im Zugversuch (DIN 53455), gemessen nach 2 Stunden bei 37 °C, 34 MPa. Die Bestimmung und Berechnung des Elastizitätsmoduls erfolgte wie in Beispiel 3 beschrieben.

Die Vergleichsbeispiele 1 bis 3 verdeutlichen, dass Disiloxane als Inhibitoren wirken und somit zur Vernetzung bei Raum- und Mundtemperatur nicht geeignet sind.

Ferner zeigt ein Vergleich des Beispiels 6 (Divinyltrisiloxan) mit Vergleichsbeispiel 3 (Divinyldisiloxan), wie überraschend scharf die Grenze zwischen inhibierenden Disiloxan und dem nicht inhibierenden und vernetzenden Trisiloxan ist. Die Verbindung Divinyldisiloxan stellt hierbei den einfachsten und klassischen Vertreter für einen Inhibitor dar, wohingegen Divinyltrisiloxan der einfachsten bzw. kurzkettigsten Vertreter der erfindungsgemäß einzusetzenden Organopolysiloxane der allgemeinen Formel I ist.

**Vergleichsbeispiel 4**

In einem Kneter wurden 140 Teile eines vinylendgestoppten Polydimethylsiloxans mit einer Viskosität von 1.000 mPa·s bei 20 °C, 10 Teile eines vinylgruppenhaltigen MQ-Harzes gelöst in einem vinylendgestoppten Polydimethylsiloxan mit einer Gesamtviskosität von 6.000 mPa·s bei 20 °C, 10 Teile einer pyrogen hergestellten, hochdispersen, hydrophobierten Kieselsäure mit einer Oberfläche von 200 $m^2/g$ nach BET, 350 Teilen Aluminiumhydroxid sowie 1,5 Teile eines Platin-Katalysators mit einem Gehalt an reinem Platin von 1 % für 1,5 Stunden homogen gemischt und danach 15 Minuten im Vakuum entgast.

Es wurde eine mittelfließende Paste (ISO 4823) erhalten. Die Paste stellt die Komponente A eines nicht erfindungsgemäßen Zweikomponenten-Siliconmaterials dar. Nach einer Lagerung über 1 Monat bei 23 °C waren die Viskosität und die Reaktivität im Sollbereich.

**Vergleichsbeispiel 5**

In einem Kneter wurden 100 Teile eines vinylendgestoppten Polydimethylsiloxans mit einer Viskosität von 1.000 mPa·s bei 20 °C, 10 Teile eines vinylgruppenhaltigen MQ-Harzes gelöst in einem vinylendgestoppten Polydimethylsiloxan mit einer Gesamtviskosität von 6.000 mPa·s bei 20 °C, 40 Teile eines Polymethylhydrogensiloxans mit einer Viskosität von 50 mPa·s und einem SiH-Gehalt von 2,3 mmol/g, 350 Teile Aluminiumhydroxid sowie 12 Teile einer pyrogen hergestellten, hochdispersen, hydrophobierten Kieselsäure mit einer Oberfläche von 200 $m^2/g$ nach BET für 1,5 Stunden homogen gemischt und danach 15 Minuten im Vakuum entgast.

Es wurde eine mittelfließende Paste (ISO 4823) erhalten. Die Paste stellt die Komponente B eines nicht erfindungsgemäßen Zweikomponenten-Siliconmaterials dar. Nach einer Lagerung über 1 Monat bei 23 °C waren die Viskosität und die Reaktivität im Sollbereich.

**Vergleichsbeispiel 6**

50 Teile der in Vergleichsbeispiel 4 beschriebenen Komponente A und 50 Teile der in Vergleichsbeispiel 5 beschriebenen Komponente B wurden aus einer Kartusche (Fa. Mixpac) ausgedrückt und über einen statischen Mischer (Fa. Mixpac) homogen gemischt.

Als Vulkanisat wurden mittelharte und elastisch verformbare Formkörper erhalten. Eine Shore D-Härte war nicht sinnvoll messbar. Mit dem Shore A-Durometer der Firma Zwick wurde eine Shore A-Härte von 70 bestimmt.

Das Elastizitätsmodul betrug im Druckversuch (in Anlehnung an DIN 53457) 4,4 MPa und im Zugversuch (DIN 53455) 5 MPa. Die Berechnung des Elastizitätsmoduls erfolgte wie in Beispiel 3 beschrieben, wobei folgender Probekörper verwendet wurde: 50 mm Länge, 10 mm Durchmesser, 15 mm Messlänge "l", Probekörperform: Zylinder.

Die Vergleichsbeispiel 4 bis 6 verdeutlichen, dass mit den herkömmlich eingesetzten Organopolysiloxanen im Gegensatz zu den erfindungsgemäß einzusetzenden Organopolysiloxanen der allgemeinen Formel I lediglich Siliconmaterialien mit einer geringen Endhärte und einem geringen Elastizitätsmodul erhalten werden.

**Vergleichsbeispiel 7**

Ein handelsübliches Bissregistrierungsmaterial auf Basis additionsvernetzender Silicone wurde entsprechend der Herstelleranweisung gemischt und zur Abbindung gebracht.

Mit dem Shore A-Durometer der Firma Zwick bzw. dem Shore D-Durometer der Firma Zwick wurde eine Shore A-Härte des so erhaltenden Materials von 85 und eine Shore D-Härte von 28 bestimmt.

Das Elastizitätsmodul im Druckversuch in Anlehnung an DIN 53457 betrug 13,1 MPa und im Zugversuch (DIN 53455) 6,9 MPa.

**Vergleichsbeispiel 8**

Ein transparentes Bissregistriermaterial Memosil 2 der Firma Hereaus Kulzer (lt. Herstellerangabe: extra hart; Verkaufsprodukt auf Grundlage der in der EP 0 522 341 A1 offenbarten Massen) auf Basis additionsvernetzender Silicone wurde gemäß den Anweisungen des Herstellers gemischt und zur Abbindung gebracht.

Mit dem Shore A-Durometer der Firma Zwick bzw. dem Shore D-Durometer der Firma Zwick wurde eine Shore A-Härte des so erhaltenden Materials von 78 und eine Shore D-Härte von 19 bestimmt.

Die Vergleichsbeispiele 7 und 8 verdeutlichen, dass Bissregistriermaterialien auf Basis additionsvernetzender Silicone nach dem Stand der Technik über eine merklich geringere Härte bzw. ein geringeres Elastizitätsmodul verfügen als die erfindungsgemäßen Zweikomponenten-Siliconmaterialien.

**Vergleichsbeispiel 9**

In einem Kneter wurden 42 Teile 1,3-Divinyl-1,1,3,3-tetramethyldisiloxan, 55 Teile Quarzmehl mit einer Korngröße von 10 $\mu$m, zwei Teile einer pyrogen hergestellten, hochdispersen, hydrophobierten Kieselsäure mit einer BET-Oberfläche von 170 $m^2$/g und ein Teil eines Platin-Katalysators mit einem Gehalt an reinem Platin von 1 % für 1,5 Stunden homogenisiert und danach 15 Minuten im Vakuum entgast.

Es wurde eine mittelfließende Paste (ISO 4823) erhalten. Die Paste stellt die Komponente A eines nicht erfindungsgemäßen Zweikomponenten-Siliconmaterials dar.

**Vergleichsbeispiel 10**

In einem Kneter wurden 37 Teile eines Polymethylhydrogensiloxans mit einer Viskosität von 30 mPa·s (gemessen bei 20°C) und einem SiH-Gehalt von 9,3 mmol/g, 61 Teile Quarzmehl mit einer mittleren Korngröße von 10 $\mu$m und zwei Teile einer pyrogen hergestellten, hochdispersen, hydrophobierten Kieselsäure mit einer BET-Oberfläche von 170 $m^2$/g für 1,5 Stunden homogenisiert und danach 15 Minuten im Vakuum entgast.

Es wurde eine mittelfließende Paste (ISO 4823) erhalten. Die Paste stellt die Komponente B eines nicht erfindungsgemäßen Zweikomponenten-Siliconmaterials dar.

Nach einer Lagerung bei 23 °C über einen Monat waren die Viskosität und die Reaktivität im Sollbereich.

**Vergleichsbeispiel 11**

33 Teile der in Vergleichsbeispiel 9 beschriebenen Komponente A und 67 Teile der in Vergleichsbeispiel 10 beschriebenen Komponente B wurden aus einer Kartusche (Fa. Mixpac) ausgedrückt und über einen statischen Mischer (Fa. Mixpac) homogen gemischt.

Das Produkt vernetzte sehr langsam und war bei Raumtemperatur 1,5 Stunden verarbeitbar. Nach 24 Stunden bei Raumtemperatur wurden harte, sehr brüchige Formkörper erhalten.

Nach 24 Stunden Lagerung der Probekörper in Wasser bei 37°C wurden folgende mechanischen Eigenschaften ermittelt:

| | |
|---|---|
| Shore D-Härte (DIN 53505): | 60 |
| Elastizitätsmodul im Biegeversuch (ISO 10477): | 34 MPa |
| Biegefestigkeit (ISO 10477): | 1,3 MPa |

Die Bestimmung und Berechnung des Elastizitätsmoduls im 3-Punkt-Biegeversuch und der Biegefestigkeit erfolgte wie in Beispiel 9 beschrieben.

Auch die Vergleichsbeispiele 9 bis 11 verdeutlichen, dass Disiloxane als Inhibitoren wirken und somit zur Vernetzung bei Raum- und Mundtemperatur nicht geeignet sind.

Ferner zeigt auch ein Vergleich des Beispiels 6 (Divinyltrisiloxan) mit Vergleichsbeispiel 11 (Divinyldisiloxan), wie überraschend scharf die Grenze zwischen dem inhibierenden Disiloxan und dem nicht inhibierenden und vernetzenden Trisiloxan ist.

Die Verbindung Divinyldisiloxan stellt hierbei den einfachsten und klassischen Vertreter für einen Inhibitor dar, wohingegen Divinyltrisiloxan der einfachste bzw. kurzkettigste Vertreter der erfindungsgemäß einzusetzenden Organopolysiloxane der Formel I ist.

**Vergleichsbeispiel 12**

Ein handelsübliches Bissregistrierungsmaterial auf Basis additionsvernetzender Vinylpolysiloxane wurde entsprechend der Herstelleranweisung gemischt und zur Abbindung gebracht.

Das Produkt blieb ca. 30 Sekunden bei Raumtemperatur verarbeitbar und härtete bei einer Temperatur von 35 °C innerhalb von etwa zwei Minuten nach Mischbeginn vollständig aus.

Als Vulkanisat wurden Formkörper erhalten, welche gut fräsbar waren.

Nach 24 Stunden Lagerung der Probekörper in Wasser bei 37°C wurden folgende mechanischen Eigenschaften ermittelt:

| | |
|---|---|
| Shore D-Härte (DIN 53505): | 43 |
| Elastizitätsmodul im 3-Punkt-Biegeversuch (ISO 10477): | 38 MPa |
| Biegefestigkeit (ISO 10477) | 8,7 MPa |

Die Bestimmung und Berechnung des Elastizitätsmoduls im 3-Punkt-Biegeversuch und der Biegefestigkeit erfolgte wie in Beispiel 9 beschrieben.

Dieses Beispiel soll verdeutlichen, dass Bissregistriermaterialien auf Basis additionsvernetzender Vinylpolysiloxane nach dem Stand der Technik über eine merklich geringere Härte bzw. Elastizitätsmodul verfügen.

Die Ergebnisse der einzelnen Beispiele und Vergleichsbeispiele sind in den Tabellen 1 und 2 zusammengefasst.

**Tabelle 1**

| Beispiel | E-Modul (1) | Bruchspannung (1) | Shore D (1) | Shore A (1) | Abbindezeit | Vinylgehalt (mmol/g) (3) / (4) |
|---|---|---|---|---|---|---|
| Bsp. 3 | 398 MPa | 783 N/cm$^2$ | 86 | > 95 | 4 min | 5,2 / 1,2 |
| Bsp. 6 | 119 MPa | 268 N/cm$^2$ | 68 | > 95 | 6 min | 7,7 / 1,3 |
| V.bsp. 3 | 34 MPa | 131 N/cm$^2$ | 60 | > 95 | 1,5 h | 10,8/2,3 |
| V.bsp. 6 | 5 MPa | 281 N/cm$^2$ | (2) | 70 | 4 min | 0,03 |
| V.bsp. 7 | 6,9 MPa | 502 N/cm$^2$ | 28 | 85 | 2,5 min | n.d. |
| V.bsp.8 | 8,6 MPa | 533 N/cm$^2$ | 19 | 78 | 4 min | n.d. |

Bsp.: Beispiel
V.bsp.: Vergleichsbeispiel
(1) nach 2 h bei 37 °C
(2) nicht sinnvoll messbar
(3) Vinylgehalt der Verbindung gemäß allgemeiner Formel I
(4) Gesamt-Vinylgehalt der Zusammensetzung
n.d. nicht definierbar

**Tabelle 2**

| Beispiel | E-Modul (1) im 3-Punkt-Biegeversuch | Biegefestigkeit (1) | Shore D (1) | Shore A (1) | Abbindezeit | Vinylgehalt (mmol/g) (3) / (4) |
|---|---|---|---|---|---|---|
| Bsp. 9 | 224 MPa | 6,7 MPa | 86 | > 95 | 4 min | 5,2 / 1,66 |
| Bsp. 12 | 956 MPa | 15,6 MPa | 82 | > 95 | 3 min | 7,69 / 1,15 |

(fortgesetzt)

| Beispiel | E-Modul (1) im 3-Punkt-Biegeversuch | Biegefestigkeit (1) | Shore D (1) | Shore A (1) | Abbindezeit | Vinylgehalt (mmol/g) (3) / (4) |
|---|---|---|---|---|---|---|
| V.bsp. 11 | 34 MPa | 1,3 MPa | 60 | > 95 | 24 h | 10,79 / 1,48 |
| V.bsp. 12 | 38 MPa | 8,7 MPa | 43 | > 95 | 2 min | 0,6/0,14 |

Bsp.: Beispiel
V.bsp.: Vergleichsbeispiel
(1) nach 2 h bei 37 °C
(2) nicht sinnvoll messbar
(3) Vinylgehalt der Verbindung gemäß allgemeiner Formel I
(4) Gesamt-Vinylgehalt der Zusammensetzung
n.d. nicht definierbar

**Patentansprüche**

**1.** Additionsvernetzendes Zweikomponenten-Siliconmaterial enthaltend

a) ein Organopolysiloxan mit wenigstens zwei Vinylgruppen im Molekül oder eine Mischung aus zwei oder mehreren Organopolysiloxanen jeweils unterschiedlicher Kettenlänge und jeweils mit mindestens zwei Vinylgruppen im Molekül,
sowie
b) wenigstens ein Organohydrogenpolysiloxan mit zwei oder mehr SiH-Gruppen im Molekül und
c) wenigstens einen Katalysator.

**dadurch gekennzeichnet, dass** das Organopolysiloxan a) oder die Mischung aus zwei oder mehreren Organopolysiloxanen a) wenigstens ein Organopolysiloxan der allgemeinen Formel I enthält

$$CH_2=CH\text{-}SiR^1R^2O\text{-}(SiR^1R^2O)_n\text{-}SiR^1R^2\text{-}CH=CH_2 \qquad (I),$$

worin $R^1$ und $R^2$ gleich oder verschieden sind und aus der Gruppe, welche aus Alkylgruppen, Arylgruppen, Aralkylgruppen, halogensubstituierten Alkylgruppen, halogensubstituierten Arylgruppen, Cyanoalkylgruppen, Cycloalkylgruppen und Cycloalkenylgruppen, bspw. Bi- oder Tricyclen, besteht, ausgewählt sind, sowie n eine ganze Zahl zwischen 1 und 9 ist,
wobei bei einem Organopolysiloxan der allgemeinen Formel I dessen Menge 10 bis 90 Gew.-%, bezogen auf die Gesamtmenge des Zweikomponenten-Siliconmaterials, beträgt oder bei einer Mischung aus zwei oder mehreren Organopolysiloxanen a) die Menge des wenigstens einen Organopolysiloxans der allgemeinen Formel I mindestens 30 Gew.-%, bezogen auf die Gesamtmenge an Organopolysiloxanen, beträgt.

**2.** Siliconmaterial nach Anspruch 1, **dadurch gekennzeichnet, dass** dieses einen Gehalt an Divinylorganodisiloxanen und/oder Divinylorganodisiloxan-Substrukturen von weniger als 0,6 Gew.-%, und besonders bevorzugt von weniger als 0,5 Gew.-%, ganz besonders bevorzugt von weniger als 0,1 Gew.-% und höchst bevorzugt von weniger als 0,01 Gew.-%, jeweils bezogen auf das Gesamtgewicht des Siliconmaterials, aufweist.

**3.** Siliconmaterial nach Anspruch 1 oder 2, **dadurch gekennzeichnet, dass** dieses 20 bis 80 Gew.-% und ganz besonders bevorzugt 25 bis 50 Gew.-%, bezogen auf die Gesamtmenge des Zweikomponenten-Siliconmaterials, eines Organopolysiloxans der allgemeinen Formel I enthält

**4.** Siliconmaterial nach einem der vorhergehenden Ansprüche, **dadurch gekennzeichnet, dass** dieses eine Mischung aus zwei oder mehreren Organopolysiloxanen a) enthält und diese Mischung mindestens 50 Gew.-% und ganz besonders bevorzugt mindestens 70 Gew.-% wenigstens eines Organopolysiloxans der allgemeinen Formel I, bezogen auf die Gesamtmenge an Organopolysiloxanen, enthält.

**5.** Siliconmaterial nach einem der vorhergehenden Ansprüche, **dadurch gekennzeichnet, dass** die Mischung aus zwei oder mehreren Organopoly-siloxanen a) neben wenigstens einem Organopolysiloxan der allgemeinen Formel

I wenigstens ein Organopolysiloxan mit zwei Vinylgruppen Im Molekül und einer Viskosität zwischen 100 und 350.000 mPa·s bei 20°C enthält.

**6.** Siliconmaterial nach einem der vorhergehenden Ansprüche, **dadurch gekennzeichnet, dass** die Mischung aus zwei oder mehreren Organopolysiloxanen a) neben wenigstens einem Organopolysiloxan der allgemeinen Formel I wenigstens ein Organopolysiloxan der allgemeinen Formel II enthält

$$CH_2{=}CH\text{-}SiR^1R^2O\text{-}(SiR^1R^2O)_m\text{-}SiR^1R^2\text{-}CH{=}CH_2 \qquad \text{(II)},$$

worin $R^1$ und $R^2$ gleich oder verschieden sind und aus der Gruppe, welche aus Alkylgruppen, Arylgruppen, Aralkylgruppen, halogensubstituierten Alkylgruppen, halogensubstituierten Arylgruppen, Cyanoalkylgruppen, Cycloalkylgruppen und Cycloalkenylgruppen, bspw. Bi- oder Tricyclen, besteht, ausgewählt sind, sowie m eine ganze Zahl zwischen 10 und 69 ist.

**7.** Siliconmaterial nach einem der vorhergehenden Ansprüche, **dadurch gekennzeichnet, dass** dieses nur ein Organopolysiloxan, und zwar eines gemäß der allgemeinen Formel I, enthält.

**8.** Siliconmaterial nach einem der vorhergehenden Ansprüche, **dadurch gekennzeichnet, dass** das wenigstens eine Organopolysiloxan der allgemeinen Formel I eine Kettenlänge n zwischen 1 und 7, besonders bevorzugt zwischen 1 und 5 und ganz besonders bevorzugt zwischen 1 und 3 aufweist.

**9.** Siliconmaterial nach einem der vorhergehenden Ansprüche, **dadurch gekennzeichnet, dass** das Siliconmaterial im ausvulkanisierten Zustand eine Shore D-Härte von wenigstens 35, besonders bevorzugt von wenigstens 45 und ganz besonders bevorzugt von wenigstens 55, und/oder ein Elastizitätsmodul von größer 20 MPa (gemessen nach DIN 53457 oder 53455), besonders bevorzugt von mehr als 100 MPa, und/oder ein im 3-Punkt-Biegeversuch nach ISO 10477 gemessenes Elastizitätsmodul von mehr als 20 MPa, besonders bevorzugt von mehr als 100 MPa und ganz besonders bevorzugt von mehr als 200 MPa aufweist.

**10.** Siliconmaterial nach einem der vorhergehenden Ansprüche, **dadurch gekennzeichnet, dass** das wenigstens eine Organohydrogenpolysiloxan b) einen SIH-Gehalt von 1 bis 15 mmol/g, besonders bevorzugt von 4 bis 14 mmol/g und ganz besonders bevorzugt von 5 bis 13 mmol/g aufweist.

**11.** Siliconmaterial nach einem der vorhergehenden Ansprüche, **dadurch gekennzeichnet, dass** es wenigstens einen Katalysator c), ausgewählt aus der Gruppe, welche aus Komplexen und kollodial vorliegenden Formen der Übergangsmetalle der 8. Nebengruppe, vorzugsweise von Platin, Palladium und Rhodium, besteht, enthält.

**12.** Siliconmaterial nach einem der vorhergehenden Ansprüche, **dadurch gekennzeichnet, dass** es zusätzlich zu den Komponenten a) bis c) wenigstens einen verstärkenden Füllstoff mit einer BET-Oberfläche von mindestens 50 $m^2/g$, ausgewählt aus der Gruppe, welche aus Titandioxid, Aluminiumoxid, Zinkoxid, Zirkonoxid, nassgefällter und pyrogen gewonnener Kieselsäure besteht, enthält.

**13.** Siliconmaterial nach einem der vorhergehenden Ansprüche, **dadurch gekennzeichnet, dass** es zusätzlich zu den Komponenten a) bis c) wenigstens einen nicht-verstärkenden Füllstoff, ausgewählt aus der Gruppe, welche aus Metalloxiden, Metallhydroxiden, Metalloxidhydroxiden, Mischoxiden, Mischhydroxiden, Quarzgut, Quarzmehl, Cristobalit, Aluminiumoxid, Calciumoxid, Aluminiumhydroxid, Calciumcarbonat, Kieselgur, Diatomenerde, Talkum, Dentalglas, Dentalkeramik, Füllstoffen auf Kunststoffbasis, Polymethacrylat, Polycarbonat, Polyvinylchlorid, Siliconharzpulver, Pulver auf Basis flourorganischer Verbindungen besteht, besonders bevorzugt mit einer mittleren Korngröße von größer gleich 0,1 μm enthält.

**14.** Siliconmaterial nach einem der vorhergehenden Ansprüche, **dadurch gekennzeichnet, dass** Komponente A und/oder Komponente B einen oder mehrere die optische Lesbarkeit/Abtastung ermöglichende Verbindungen ausgewählt aus der Gruppe, welche aus Metallpulvern, Metallpigmenten, Metallicpigmenten und Titandioxid besteht, enthält.

**15.** Siliconmaterial nach einem der vorhergehenden Ansprüche, **dadurch gekennzeichnet, dass** es

$a_1$) 10 bis 90 Gew.-%, vorzugsweise 10 bis 60 Gew.-% wenigstens eines Organopolysiloxans der allgemeinen Formen I mit mindestens zwei Vinylgruppen im Molekül und einem Si-Vinylgehalt von 0,7 bis 10 mmol/g, bevorzugt einem Si-Vinylgehalt von 0,8 bis 9 mmol/g,
$a_2$) 0 bis 80 Gew.-%, vorzugsweise 0 bis 50 Gew.-% wenigstens eines Organopolysiloxans mit zwei Vinylgruppen im Molekül und einer Viskosität zwischen 100 und 350.000 mPa·s bei 20°C und/oder wenigstens eines Organopolysiloxans der allgemeinen Formel II,
b) 1 bis 90 Gew.-%, vorzugsweise 10 bis 60 Gew.-% eines Organohydrogenpolysiloxans mit mindestens zwei, besonders bevorzugt mindestens 3 SiH-Gruppen und einem SiH-Gehalt von 0,1 bis 15 mmol/g, besonders bevorzugt von 4 bis 14 mmol/g und ganz besonders bevorzugt von 6 bis 13 mmol/g,
c) 0,0001 bis 0,1 Gew.-%, vorzugsweise 0,0005 bis 0,05 Gew.-% wenigstens eines Katalysators zur Beschleunigung der Hydrosilylierungsreaktion, bezogen auf reines Metall,
d) 0 bis 80 Gew.-%, vorzugsweise 0 bis 70 Gew.-% und besonders bevorzugt 0,5 bis 50 Gew.-% an verstärkenden Füllstoffen,
e) 0 bis 90 Gew.-%, vorzugsweise 0 bis 80 Gew.-% und besonders bevorzugt 0,1 bis 75 Gew.-% an nicht verstärkenden Füllstoffen,
f) 0 bis 5 Gew.-%, vorzugsweise 0 bis 2 Gew.-% wenigstens eines Farbstoffes,
g) 0 bis 30 Gew.-%, vorzugsweise 0 bis 5 Gew.-% an Feuchtigkeitsbinder,
h) 0 bis 1 Gew.-%, vorzugsweise 0 bis 0,6 Gew.-% und besonders bevorzugt 0 bis 0,01 Gew.-% an Inhibitoren,
i) 0 bis 80 Gew.-%, vorzugsweise 0 bis 50 Gew.-% wenigstens eines vinylgruppenhaltigen MQ-Harzes,
j) 0 bis 80 Gew.-%, vorzugsweise 0 bis 50 Gew.-% an Compounds aus vinylgruppenhaltigen Organopolysiloxanen und verstärkenden Füllstoffen,
k) 0 bis 10 Gew.-%, vorzugsweise 0 bis 5 Gew.-% an Tensiden, Emulgatoren und/oder Stabilisatoren,
l) 0 bis 90 Gew.-%, vorzugsweise 0 bis 80 Gew.-% an radioopaken Substanzen,
m) 0 bis 20 Gew.-%, vorzugsweise 0 bis 10 Gew.-% an $H_2$-Absobern/Adsorbern oder an die $H_2$-Entwicklung reduzierenden bzw. eliminierenden Substanzen, sowie,
n) 0 bis 20 Gew.-%, vorzugsweise 0 bis 10 Gew.-% an die optische Lesbarkeit/Abtastung ermöglichende Verbindungen,

enthält.

**16.** Verwendung eines Siliconmaterials nach einem der Ansprüche 1 bis 15 in der Dentalmedizin und/oder Dentaltechnik.

**17.** Verwendung eines Siliconmaterials nach Anspruch 16 als Bissregistriermaterial, als Zement, als provisorische Krone, als Brückenmaterial, als provisorisches Füllmaterial und/oder als dauerhaftes Füllmaterial.

## Claims

**1.** An addition-cross-linking two-component silicone material containing

a) an organopolysiloxane having at least two vinyl groups in the molecule or a mixture of two or more organopolysiloxanes, each of different chain length and each having at least two vinyl groups in the molecule,
as well as
b) at least one organohydrogenpolysiloxane having two or more SiH groups in the molecule and
c) at least one catalyst,

**characterised in that** the organopolysiloxane a) or the mixture of two or more organopolysiloxanes a) contains at least one organopolysiloxane of general formula I

$$CH_2{=}CH\text{-}SiR^1R^2O\text{-}\ (SiR^1R^2O)_n\text{-}SiR^1R^2\text{-}CH{=}CH_2 \qquad (I),$$

in which $R^1$ and $R^2$ are identical or different and are selected from the group consisting of alkyl groups, aryl groups, aralkyl groups, halogen-substituted alkyl groups, halogen-substituted aryl groups, cyanoalkyl groups, cycloalkyl groups and cycloalkenyl groups, such as bicyclene or tricyclene, and n is an integer between 1 and 9,
in the case of an organopolysiloxane of general formula I, the amount thereof being 10 to 90 % by weight based on the total amount of the two-component silicone material, or, in the case of a mixture of two or more organopolysiloxanes a), the amount of the at least one organopolysiloxane of general formula I being at least 30 % by weight based on the total amount of organopolysiloxanes.

**2.** The silicone material according to claim 1, **characterised in that** it has a content of divinylorganodisiloxanes and/or

divinylorganodisiloxane substructures of less than 0.6 % by weight, more preferably of less than 0.5 % by weight, even more preferably of less than 0.1 % by weight, and most preferably of less than 0.01 % by weight, in each case based on the total weight of the silicone material.

**3.** The silicone material according to claim 1 or 2, **characterised in that** it contains 20 to 80 % by weight and even more preferably 25 to 50 % by weight, based on the total amount of the two-component silicone material, of an organopolysiloxane of general formula I.

**4.** The silicone material according to one of the preceding claims, **characterised in that** it contains a mixture of two or more organopolysiloxanes a) and this mixture contains at least 50 % by weight, and even more preferably at least 70 % by weight, of at least one organopolysiloxane of general formula I, based on the total amount of organopolysiloxanes.

**5.** The silicone material according to one of the preceding claims, **characterised in that** the mixture of two or more organopolysiloxanes a) contains, in addition to at least one organopolysiloxane of general formula I, at least one organopolysiloxane having two vinyl groups in the molecule and a viscosity of between 100 and 350,000 mPa·s at 20 °C.

**6.** The silicone material according to one of the preceding claims, **characterised in that** the mixture of two or more organopolysiloxanes a) contains, in addition to at least one organopolysiloxane of general formula I, at least one organopolysiloxane of general formula II

$$CH_2{=}CH\text{-}SiR^1R^2O\text{- }(SiR^1R^2O)_m\text{-}SiR^1R^2\text{-}CH{=}CH_2 \qquad (II),$$

in which $R^1$ and $R^2$ are identical or different and are selected from the group consisting of alkyl groups, aryl groups, aralkyl groups, halogen-substituted alkyl groups, halogen-substituted aryl groups, cyanoalkyl groups, cycloalkyl groups and cycloalkenyl groups, such as bicyclene or tricyclene, and m is an integer between 10 and 69.

**7.** The silicone material according to one of the preceding claims, **characterised in that** it contains only one organopolysiloxane, more specifically an organopolysiloxane according to general formula I.

**8.** The silicone material according to one of the preceding claims, **characterised in that** the at least one organopolysiloxane of general formula I has a chain length n between 1 and 7, more preferably between 1 and 5, and even more preferably between 1 and 3.

**9.** The silicone material according to one of the preceding claims, **characterised in that** the silicone material in the fully vulcanised state has a Shore-D hardness of at least 35, more preferably of at least 45, and even more preferably of at least 55, and/or a modulus of elasticity (measured according to DIN 53457 or 53455) of greater than 20 MPa, more preferably of more than 100 MPa, and/or a modulus of elasticity measured in the three-point bending test according to ISO 10477 of more than 20 MPa, more preferably of more than 100 MPa and even more preferably of more than 200 MPa.

**10.** The silicone material according to one of the preceding claims, **characterised in that** the at least one organohydrogenpolysiloxane b) has an SiH content of 1 to 15 mmol/g, more preferably of 4 to 14 mmol/g, and even more preferably of 5 to 13 mmol/g.

**11.** The silicone material according to one of the preceding claims, **characterised in that** it contains at least one catalyst c), selected from the group consisting of complexes and colloidal forms of the transition metals of the eighth subgroup, preferably platinum, palladium and rhodium.

**12.** The silicone material according to one of the preceding claims, **characterised in that**, in addition to the components a) to c), it also contains at least one reinforcing filler having a BET surface of at least 50 $m^2/g$, selected from the group consisting of titanium dioxide, aluminium oxide, zinc oxide, zirconium oxide, and wet-precipitated and pyrogenic silicas.

**13.** The silicone material according to one of the preceding claims, **characterised in that**, in addition to the components a) to c), it also contains at least one non-reinforcing filler, selected from the group consisting of metal oxides, metal hydroxides, metal oxide hydroxides, mixed oxides, mixed hydroxides, fused silica, quartz powder, cristobalite, aluminium oxide, calcium oxide, aluminium hydroxide, calcium carbonate, kieselguhr, diatomaceous earths, talc, dental glass, dental ceramics, plastics-based fillers, polymethacrylate, polycarbonate, polyvinyl chloride, silicone resin powder, and powder based on fluoroorganic compounds, more preferably with a mean particle size of greater than or equal to 0.1 μm.

**14.** The silicone material according to one of the preceding claims, **characterised in that** component A and/or component B contains one or more compounds which enhance optical readability/scanning, selected from the group consisting of metal powders, metal pigments, metallic pigments and titanium dioxide.

**15.** The silicone material according to one of the preceding claims, **characterised in that** it contains

$a_1$) 10 to 90 % by weight, preferably 10 to 60 % by weight, of at least one organopolysiloxane of general formula I having at least two vinyl groups in the molecule and an Si-vinyl content of 0.7 to 10 mmol/g, preferably an Si-vinyl content of 0.8 to 9 mmol/g,
$a_2$) 0 to 80 % by weight, preferably 0 to 50 % by weight, of at least one organopolysiloxane having two vinyl groups in the molecule and a viscosity between 100 and 350,000 mPa·s at 20 °C and/or at least one organopolysiloxane of general formula II,
b) 1 to 90 % by weight, preferably 10 to 60 % by weight, of an organohydrogenpolysiloxane having at least two, more preferably at least three, SiH groups and an SiH content of 0.1 to 15 mmol/g, more preferably of 4 to 14 mmol/g, and even more preferably of 6 to 13 mmol/g,
c) 0.0001 to 0.1 % by weight, preferably 0.0005 to 0.05 % by weight, based on pure metal, of at least one catalyst for acceleration of the hydrosilylation reaction,
d) 0 to 80 % by weight, preferably 0 to 70 % by weight, and more preferably 0.5 to 50 % by weight, of reinforcing fillers,
e) 0 to 90 % by weight, preferably 0 to 80 % by weight, and more preferably 0.1 to 75 % by weight, of non-reinforcing fillers,
f) 0 to 5 % by weight, preferably 0 to 2 % by weight, of at least one dye,
g) 0 to 30 % by weight, preferably 0 to 5 % by weight, of moisture binders,
h) 0 to 1 % by weight, preferably 0 to 0.6, and more preferably 0 to 0.01 % by weight, of inhibitors,
i) 0 to 80 % by weight, preferably 0 to 50 % by weight, of at least one vinyl-group-containing MQ resin,
j) 0 to 80 % by weight, preferably 0 to 50 % by weight, of compounds of vinyl-group-containing organopolysiloxanes and reinforcing fillers,
k) 0 to 10 % by weight, preferably 0 to 5 % by weight, of surfactants, emulsifiers and/or stabilisers,
l) 0 to 90 % by weight, preferably 0 to 80 % by weight, of radiopaque substances,
m) 0 to 20 % by weight, preferably 0 to 10 % by weight, of $H_2$ absorbers/adsorbers or substances that reduce or eliminate $H_2$ evolution,
as well as
n) 0 to 20 % by weight, preferably 0 to 10 % by weight, of compounds which enhance optical readability/scanning.

**16.** Use of a silicone material according to one of claims 1 to 15 in dental medicine and/or dental technology.

**17.** Use of a silicone material according to claim 16 as bite registration material, as cement, as temporary crowns, as bridge material, as temporary filling material and/or as permanent filling material.

## Revendications

**1.** Matériau silicone à deux composants subissant une réticulation par addition, contenant

a) un organopolysiloxane dont la molécule présente au moins deux groupements vinyle ou un mélange de deux ou de plusieurs organopolysiloxanes dont chacun présente une longueur de chaîne différente et dont les molécules présentent au moins deux groupements vinyle
ainsi que
b) au moins un polysiloxane organohydrogéné dont la molécule présente deux ou plusieurs groupements SiH, et
c) au moins un catalyseur,

**caractérisé en ce que** l'organopolysiloxane a) ou le mélange de deux ou de plusieurs organopolysiloxanes a) contient au moins un organopolysiloxane répondant à la formule générale 1

$$CH_2=CH\text{-}SiR^1R^2O\text{- }(SiR^1R^2O)_n\text{-}SiR^1R^2\text{-}CH=CH_2 \quad (I),$$

dans laquelle $R^1$ et $R^2$ sont identiques ou différents et choisis dans le groupe constitué de groupements alkyle, groupements aryle, groupements aralkyle, groupements alkyle substitués avec des halogènes, groupements aryle substitués avec des halogènes, groupements cyanoalkyle et groupements cycloalcényle, par exemple de composés bi- ou tricycliques, et n est un nombre entier entre 1 et 9,
lorsqu'il s'agit d'un seul organopolysiloxane répondant à la formule générale I, sa quantité étant de 10 à 90 % en poids, par rapport à la quantité totale du matériau silicone à deux composants, ou bien, lorsqu'il s'agit d'un mélange de deux ou de plusieurs organopolysiloxanes a), la quantité de l'au moins un organopolysiloxane répondant à la formule générale I étant d'au moins 30 % en poids, par rapport à la quantité totale de organopolysiloxanes.

2. Matériau silicone selon la revendication 1, **caractérisé en ce qu'**il présente une teneur en divinylorganodisiloxanes et/ou en sous-structures de divinylorganodisiloxanes inférieure à 0,6 % en poids et, avec une préférence particulière, inférieure à 0,5 % en poids, et, avec une préférence toute particulière inférieure à 0,1 % et, avec la plus grande préférence, inférieure à 0,01 %, toujours par rapport au poids total dudit matériau silicone.

3. Matériau silicone selon la revendication 1 ou 2, **caractérisé en ce qu'**il contient 20 à 80 % en poids et, avec une préférence toute particulière, 25 à 50 % en poids d'un organopolysiloxane répondant à la formule générale I, par rapport à la quantité totale dudit matériau silicone.

4. Matériau silicone selon l'une des revendications précédentes, **caractérisé en ce qu'**il contient un mélange de deux ou de plusieurs organopolysiloxanes a) et que ledit mélange contient au moins 50 % en poids et, avec une préférence toute particulière, au moins 70 % en poids d'au moins un organopolysiloxane répondant à la formule générale I, par rapport à la quantité totale d'organopolysiloxanes.

5. Matériau silicone selon l'une des revendications précédentes, **caractérisé en ce que** ledit mélange de deux ou de plusieurs organopolysiloxanes a) contient, à part l'au moins un organopolysiloxane répondant à la formule générale I, au moins un organopolysiloxane dont la molécule contient deux groupes vinyle et dont la viscosité se situe entre 100 et 350 000 mPa·s à 20 °C.

6. Matériau silicone selon l'une des revendications précédentes, **caractérisé en ce que** ledit mélange de deux ou de plusieurs organopolysiloxanes a) contient, outre l'au moins un organopolysiloxane répondant à la formule générale I, au moins un organopolysiloxane répondant à la formule générale II

$$CH_2=CH\text{-}SiR^1R^2O\text{- }(SiR^1R^2O)_m\text{-}SiR^1R^2\text{-}CH=CH_2 \quad (II),$$

dans laquelle $R^1$ et $R^2$ sont identiques ou différents et choisis dans le groupe constitué de groupements alkyle, groupements aryle, groupements aralkyle, groupements alkyle substitués avec des halogènes, groupements aryle substitués avec des halogènes, groupements cyanoalkyle et groupements cycloalcényle, par exemple de composés bi- ou tricycliques, et m est un nombre entier entre 10 et 69.

7. Matériau silicone selon l'une des revendications précédentes, **caractérisé en ce qu'**il ne contient qu'un organopolysiloxane, s'agissant d'un compose répondant à la formule générale I.

8. Matériau silicone selon l'une des revendications précédentes, **caractérisé en ce que** l'au moins un organopolysiloxane répondant à la formule générale I présente une longueur de chaîne n entre 1 et 7, avec une préférence particulière entre 1 et 5 et, avec une préférence toute particulière, entre 1 et 3.

9. Matériau silicone selon l'une des revendications précédentes, **caractérisé en ce que** ledit matériau silicone présente, à l'état complètement vulcanisé, une dureté Shore-D d'au moins 35, avec une préférence particulière d'au moins 45 et, avec une préférence toute particulière, d'au moins 55, et/ou un module d'élasticité supérieur à 20 MPa (mesuré selon DIN 53457 ou 53455, avec une préférence particulière supérieur à 100 MPa, et/ou un module d'élasticité, mesuré lors d'un essai de flexion à 3 points selon ISO 10477, supérieur à 20 MPa, avec une préférence particulière supérieur à 100 MPa et, avec une préférence toute particulière, supérieur à 200 MPa.

10. Matériau silicone selon l'une des revendications précédentes, **caractérisé en ce que** l'au moins un polysiloxane organohydrogéné b) présente une teneur en SiH de 1 à 15 mmol/g, avec une préférence particulière de 4 à 14

mmol/g et, avec une préférence toute particulière, de 5 à 13 mmol/g.

**11.** Matériau silicone selon l'une des revendications précédentes, **caractérisé en ce qu'**il contient au moins un catalyseur c), choisi dans le groupe constitué de métaux de transition du groupe de transition 8 sous leurs formes colloïdales et sous forme de leurs complexes, s'agissant préférentiellement de platine, de palladium et de rhodium.

**12.** Matériau silicone selon l'une des revendications précédentes, **caractérisé en ce qu'**il contient, outre les composants a) à c), au moins une charge de renforcement avec une surface BET d'au moins 50 $m^2/g$, choisie dans le groupe constitué de dioxyde de titane, d'oxyde d'aluminium, d'oxyde de zinc, d'oxyde zirconium, de silice précipitée et pyrogénée.

**13.** Matériau silicone selon l'une des revendications précédentes, **caractérisé en ce qu'**il contient, outre les composants a) à c), au moins une charge sans effet de renforcement, choisie dans le groupe constitué d'oxydes de métaux, d'hydroxydes de métaux, d'hydroxydes d'oxydes de métaux, oxydes mixtes, d'hydroxydes mixtes, de quartz brut, de poudre de quartz, de cristobalite, d'oxyde d'aluminium, d'oxyde de calcium, d'hydroxyde d'aluminium, de carbonate de calcium, de kieselguhr, de terre de diatomée, de talc, de verre dentaire, de céramique dentaire, de charges à base de matières plastiques, de polyméthacrylate, de polycarbonate, de polychlorure de vinyle, de résine silicone en poudre, de poudre à base de composés organiques fluorés, ayant avec une préférence particulière une granulométrie moyenne d'au moins 0,1 $\mu$m.

**14.** Matériau silicone selon l'une des revendications précédentes, **caractérisé en ce que** le composant A et/ou le composant B contient un ou plusieurs composés permettant une/un lecture/balayage optique, choisis dans le groupe constitué de poudres métalliques, de pigments métalliques, de pigments à effet métallisé et de dioxyde de titane.

**15.** Matériau silicone selon l'une des revendications précédentes, **caractérisé en ce qu'**il contient

$a_1$) 10 à 90 % en poids, de préférence 10 à 60 % en poids, d'au moins un organopolysiloxane répondant à la formule générale I dont la molécule présente au moins deux groupements vinyle et dont la teneur en Si-vinyle est de 0,7 à 10 mmol/g, la teneur en Si-vinyle étant préférentiellement de 0,8 à 9 mmol/g,
$a_2$) 0 à 80 % en poids, de préférence 0 à 50 % poids, d'au moins un organopolysiloxane dont la molécule présente deux groupements vinyle et dont la viscosité se situe entre 100 et 350 000 mPa·s à 20 °C et/ou d'au moins un organopolysiloxane répondant à la formule générale II,
b) 1 à 90 % en poids, de préférence 10 à 60 % en poids, d'un polysiloxane organohydrogéné dont la molécule présente deux, avec une préférence particulière trois groupements SiH et dont la teneur en SiH est de 0,1 à 15 mmol/g, avec une préférence particulière de 4 à 14 mmol/g et, avec une préférence toute particulière, de 6 à 13 mmol/g,
c) 0,0001 à 0,1 % en poids, de préférence 0,0005 à 0,05 % en poids, d'au moins un catalyseur destiné à accélérer la réaction d'hydrosilylation, par rapport au métal pur,
d) 0 à 80 % en poids, de préférence 0 à 70 % en poids et, et, avec une préférence toute particulière, 0,5 à 50 % en poids de charges de renforcement,
e) 0 à 90 % en poids, de préférence 0 à 80 % en poids et, et, avec une préférence toute particulière, 0,1 à 75 % en poids de charges sans effet de renforcement,
f) 0 à 5 % en poids, de préférence 0 à 2 % en poids, d'au moins un colorant,
g) 0 à 30 % en poids, de préférence 0 à 5 % en poids, d'un agent d'absorption d'humidité,
h) 0 à 1 % en poids, de préférence 0 à 0,5 en poids et, avec une préférence particulière, 0 à 0,01 % en poids d'inhibiteurs,
i) 0 à 80 % en poids, de préférence 0 à 50 % en poids, d'au moins une résine MQ contenant des groupements vinyle,
j) 0 à 80 % en poids, de préférence 0 à 50 % en poids, de pré-mélanges réalisés à partir d'organopolysiloxanes contenant des groupements vinyle et de charges de renforcement,
k) 0 à 10 % en poids, de préférence 0 à 5 % en poids, d'agents tensioactifs, d'émulsifiants et/ou d'agents stabilisants,
l) 0 à 90 % en poids, de préférence 0 à 80 % en poids, de substances radio-opaques,
m) 0 à 20 % en poids, de préférence 0 à 10 % en poids, d'agents d'absorption/d'adsorption de $H_2$ ou de substances réduisant et/ou supprimant le dégagement de $H_2$, ainsi que
n) 0 à 20 % en poids, de préférence 0 à 10 % en poids, de composés permettant une/un lecture/balayage optique.

**16.** Utilisation d'un matériau silicone selon l'une des revendications 1 à 15 dans l'odontologie et/ou l'art dentaire.

**17.** Utilisation d'un matériau silicone selon la revendication 16 en tant que matériau de prise d'empreinte dentaire, en tant que ciment, en tant que couronne provisoire, en tant que matériau de bridge, en tant que matériau de plombage provisoire et/ou en tant que matériau de plombage définitif.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2646726 A1
- EP 0522341 A1
- DE OS2646726 A
- EP 0894117 B1

### In der Beschreibung aufgeführte Nicht-Patentliteratur

- Ullmann Encyclopädie der Technischen Chemie. vol. 21, 523